(19) Europäisches Patentamt
European Patent Office
Office européen des brevets

(11) **EP 4 678 437 A1**

(12) **EUROPÄISCHE PATENTANMELDUNG**

(43) Veröffentlichungstag:
**14.01.2026 Patentblatt 2026/03**

(21) Anmeldenummer: **24188294.3**

(22) Anmeldetag: **12.07.2024**

(51) Internationale Patentklassifikation (IPC):
**B60K 1/02** *(2006.01)* **B60K 17/28** *(2006.01)*

(52) Gemeinsame Patentklassifikation (CPC):
**B60K 17/28; B60K 1/02; F16H 37/046;**
F16H 2200/0021; F16H 2200/0034

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Deere & Company**
**Moline, IL 61265 (US)**

(72) Erfinder: **Rajani, Krutin**
**Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(54) **ANTRIEBSANORDNUNG, ACHSE UND ARBEITSMASCHINE**

(57) Die Erfindung betrifft eine Antriebsanordnung (22) für eine Arbeitsmaschine (10). Die Antriebsanordnung (22) umfasst eine erste und eine zweite Energiemaschine (40, 42) und einen Fahrantrieb (44) und einen ersten Leistungsausgang (46). Mit der Antriebsanordnung (22) sind $m \geq 2$ Fahrstufen am Fahrantrieb (44) und $t \geq 0$ Schaltpunkte am ersten Leistungsausgang (46) realisierbar. Die Antriebsanordnung (22) umfasst $x = m + t + 1$ Koppeleinrichtungen (K1, K2, K3, K4, K5, K6, K7, K8), wobei die erste Energiemaschine (40) durch mindestens eine Koppeleinrichtung (K1, K2, K3, K4, K5, K6, K7, K8) mit dem Fahrantrieb (44) verbindbar ist und die zweite Energiemaschine (42) durch jeweils mindestens eine Koppeleinrichtung (K1, K2, K3, K4, K5, K6, K7, K8) mit dem Fahrantrieb (44) und dem ersten Leistungsausgang (46) verbindbar ist. Die Erfindung betrifft weiter eine Achse (100) und eine Arbeitsmaschine (10).

FIG. 1

**Beschreibung**

Die Erfindung betrifft eine Antriebsanordnung gemäss dem Oberbegriff des unabhängigen Anspruchs 1, eine Achse gemäss dem Oberbegriff des unabhängigen Anspruchs 10 und eine Arbeitsmaschine gemäss dem Oberbegriff des unabhängigen Anspruchs 11.

Stand der Technik

Arbeitsmaschinen, bevorzugt Baumaschinen oder landwirtschaftliche Arbeitsfahrzeuge, besondere bevorzugt landwirtschaftliche Zugfahrzeuge oder Ackerschlepper, werden üblicherweise durch Verbrennungsmotoren angetrieben. Der Verbrennungsmotor kann dabei eine oder mehrere Achsen der Arbeitsmaschine, insbesondere eine Hinterachse und/oder eine Vorderachse antreiben. Der Antrieb der Achse(n) erfolgt für gewöhnlich von der Kurbelwelle des Verbrennungsmotors über ein Getriebe mit veränderbarer Übersetzung und einem oder mehrere Fahrantrieben, insbesondere eines oder mehrere Differenzialgetriebe. Der Fahrantrieb, insbesondere das Differenzialgetriebe, kann abtriebsseitig mit den Wellen der Räder, insbesondere der Vorder- und/oder Hinterräder, in Antriebsverbindung stehen.

Ebenso kann der Verbrennungsmotor zusätzlich einen ersten Leistungsausgang, insbesondere einen mechanische Leistungsausgang, antreiben. Im Speziellen kann der Verbrennungsmotor eine Zapfwelleneinheit, insbesondere eine Zapfwelle, antreiben. Die Zapfwelleneinheit kann sich an einer Rückseite der Arbeitsmaschine befinden, insbesondere in der Nachbarschaft einer Anbauschnittstelle für Arbeitsgeräte.

Derzeit liegen Vorschläge vor, derartige Arbeitsmaschinen durch Elektromotoren anzutreiben, insbesondere als rein batteriegetriebene Fahrzeuge. Eine fachübliche, naheliegende Vorgehensweise würde den bisherigen (mit einer in Längsrichtung verlaufenden, nunmehr jedoch elektromotorisch angetriebenen Welle und einem Differenzialgetriebe aufgebauten) Antriebsstrang auf derartige Fahrzeuge übertragen, wie in der US 2023/0227106 A1 gezeigt. Die DE 10 2008 032 848 A1 zeigt eine Achse für eine Arbeitsfahrzeug, insbesondere ein Flurförderfahrzeug, mit einem Differenzialgetriebe, das abtriebsseitig mit den Wellen der Hinterräder in Antriebsverbindung steht. Der Antrieb des Differenzialgetriebes erfolgt durch einen Elektromotor über eine Hohlwelle, die eine der Wellen der Hinterräder koaxial umschließt. Die Hohlwelle wird ihrerseits über einen als Innenläufer aufgeführten Elektromotor angetrieben, der um die Hohlwelle herum angebracht ist. Eine ähnliche Anordnung für einen Achsantrieb eines Kraftfahrzeugs, jedoch mit einem Zahnradgetriebe zwischen dem Elektromotor und der Hohlwelle und einem Schaltgetriebe zwischen der Hohlwelle und dem Differenzialgetriebe, zeigt die DE 10 2020 114 063 A1.

Die Zapfwelle wird im Stand der Technik durch den Verbrennungsmotor angetrieben, wobei zur Drehzahleinstellung ein Überlagerungsgetriebe verwendet werden kann, das mit einem zusätzlichen Elektromotor gekoppelt ist (DE 10 2017 205 149 A1, EP 1 466 773 A2). Bei rein elektrischen Antrieben wurde vorgeschlagen, die Zapfwelle durch einen ersten Elektromotor anzutreiben, der durch ein Überlagerungsgetriebe mit dem Fahrantrieb verbunden ist, während das Überlagerungsgetriebe zudem durch einen weiteren Elektromotor angetrieben wird (DE 10 2019 106 294 A1).

Nachteil der bekannten Antriebsanordnungen ist, dass diese nicht lastschaltbar sind, insbesondere nicht nahtlos (engl. seamless) schaltbar sind, und/oder nicht eine ausreichende Anzahl an Gängen für den Fahrantrieb und/oder den ersten Leistungsausgang aufweisen. Darüber hinaus ist nachteilig, dass die bekannten Antriebsanordnungen konstruktiv zu kompliziert oder komplex ausgestaltet sind.

Ausgehend von diesem Stand der Technik ist es eine Aufgabe der vorliegenden Erfindung eine Antriebsanordnung, eine Achse und eine Arbeitsmaschine vorzuschlagen, welche die aus dem Stand der Technik bekannten Nachteile weitgehend vermeiden. Der vorliegenden Erfindung liegt daher insbesondere die Aufgabe zugrunde eine Antriebsanordnung, eine Achse und eine Arbeitsmaschine vorzuschlagen, durch welche die vorgenannten Probleme überwunden werden. Im Speziellen eine Antriebsanordnung, eine Achse und eine Arbeitsmaschine vorzuschlagen, die konstruktiv einfach ausgestaltet sind und/oder mehrere Gänge aufweisen und/oder für weniger aufwändig ausgestaltet sind und/oder bevorzugt nahtlos bzw. synchronisiert schaltbar sind.

Diese Aufgabe wird durch eine Antriebsanordnung mit den Merkmalen des Anspruchs 1 und eine Achse mit den Merkmalen des Anspruchs 10 und eine Arbeitsmaschine mit den Merkmalen des Anspruchs 11 gelöst. Die abhängigen Ansprüche beziehen sich auf besonders vorteilhafte Ausführungsformen der Erfindung.

Erfindungsgemäss wird eine Antriebsanordnung für eine Arbeitsmaschine vorgeschlagen. Im Speziellen wird insbesondere eine Antriebsanordnung für eine Achse einer Arbeitsmaschine, bevorzugt eine elektrisch angetriebene Achse einer Arbeitsmaschine vorgeschlagen. Die Antriebsanordnung umfasst einen ersten und einen zweiten Elektromotor und einen Fahrantrieb und einen ersten Leistungsausgang. Ausserdem sind mit der Antriebsanordnung $m \geq 2$ Fahrstufen, bevorzugt schaltbare Fahrstufen, besonders bevorzugt nahtlos schaltbarer Schaltstufen, am Fahrantrieb und $t \geq 0$ Schaltpunkte am ersten Leistungsausgang, bevorzugt nahtlos schaltbare Schaltpunkte am ersten Leistungsausgang realisierbar. Die Fahrstufen können Gänge oder Übersetzungen oder Übersetzungsstufen sein. Mit anderen Worten, die Antriebsanordnung umfasst $m \geq 2$ Fahrstufen am Fahrantrieb und $t \geq 0$ Schaltpunkte am ersten Leistungsausgang. Im Speziellen ist die Antriebsanordnung in $m \geq 2$ Fahrstufen am Fahrantrieb und $t \geq 0$ Schaltpunkte am ersten Leistungsausgang einstellbar und/oder verstellbar und/oder ansteuerbar. Die Antriebsanordnung umfasst x = m + t + 1 Koppeleinrichtungen, wobei die erste Energiemaschine durch eine Koppeleinrichtung mit dem Fahrantrieb verbindbar ist und die zweite Energiemaschine durch jeweils eine Koppeleinrichtung mit dem Fahrantrieb und dem ersten Leistungsausgang verbindbar ist.

Die erste und zweite Energiemaschine können als Elektromotoren, insbesondere als ein erster und zweiter Elektromotor ausgebildet sein. Alternativ können die erste und zweite Energiemaschine als Brennstoffzelle, insbesondere als ein erster und zweiter Elektromotor Brennstoffzelle ausgebildet sein. Die erste und/oder zweite Energiemaschine können aber auch eine mit Gleichstrom und/oder Drehstrom betriebene Synchron- und/oder Asynchronmaschine mit permanenter und/oder elektrischer Erregung, besonders bevorzugt eine permanenterregte Drehstrom-Synchronmaschine sein. Die erste und zweite Energiemaschine können motorisch oder generatorisch betreibbar sein. Die erste und zweite Energiemaschine können die Antriebsanordnung mit einer Drehzahl und/oder einem Drehmoment antreiben. Die erste Energiemaschine, insbesondere der erste Elektromotor, kann ein erste Antriebswelle umfassen. Die zweite Energiemaschine, insbesondere der zweite Elektromotor, kann ein zweite Antriebswelle umfassen.

Antriebsanordnung, insbesondere die Achse oder die Arbeitsmaschine, kann einen oder mehrere Energiespeicher umfassen. Der oder die Energiespeicher kann mit der ersten und/oder der zweiten Energiemaschine verbunden und/oder koppelbar sein, insbesondere elektrisch verbunden und/oder elektrisch koppelbar sein. Der Energiespeicher kann ein elektrischer Energiespeicher sein. Der Energiespeicher kann die angeschlossene(n) Energiemaschine(n) mit Energie, insbesondere elektrischer Energie versorgen. Der Energiespeicher kann als eine Batterie und/oder ein Akku und/oder eine Superkondensator und/oder eine Brennstoffzelle und/oder eine sonstige Vorrichtung zur Speicherung von elektrischer Energie ausgebildet sein.

Unter verbunden kann bevorzugt mechanisch verbunden, besonders bevorzugt antreibbar verbunden, also drehmoment- und/oder drehzahlübertragend verbunden, und/oder gekoppelt oder koppelbar, also mechanisch gekoppelt oder mechanisch koppelbar verstanden werden. Unter mechanisch verbunden, bevorzugt unter antreibbar verbunden und/oder gekoppelt oder koppelbar bzw. mechanisch gekoppelt oder mechanisch koppelbar kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Der Fahrantrieb kann eine erste Ausgangswelle umfassen und/oder als erste Ausgangswelle ausgebildet sein. Ebenso kann der Fahrantrieb ein Differenzialgetriebe und die erste Ausgangswelle umfassen. Dabei kann das Differenzialgetriebe antriebsseitig mit der ersten Ausgangswelle verbunden sein. Ausserdem kann das Differenzialgetriebe abtriebsseitig mit einer linken Welle und einer rechten Welle zum Antrieb von Bodeneingriffsmitteln der Achse verbunden sein. Die erste Ausgangswelle kann als eine Hohlwelle ausgebildet sein, die insbesondere die linke und/oder rechte Welle teilweise oder vollständig umschliesst.

Der erste Leistungsausgang kann eine zweite Ausgangswelle umfassen und/oder als zweite Ausgangswelle ausgebildet sein. Ebenso kann der erste Leistungsausgang zusätzlich eine Zapfwelleneinheit umfassen. Die Zapfwelleneinheit kann ein Zapfwellengetriebe und/oder eine Zapfwelle umfassen. Die Zapfwelleneinheit, insbesondere das Zapfwellengetriebe, kann antriebsseitig mit der zweiten Ausgangswelle verbunden sein. Ausserdem kann die Zapfwelleneinheit, insbesondere das Zapfwellengetriebe, abtriebsseitig mit der Zapfwelle verbindbar oder verbunden sein.

Die Koppeleinrichtungen können jeweils zwischen einer ersten Position, insbesondere einem geschlossenen oder verbundenem oder gekoppelten Zustand, und einer zweiten Position, insbesondere einem geöffneten oder nicht verbundenem oder entkoppelten Zustand, bewegbar sein. In der ersten Position kann die jeweilige Koppeleinrichtungen mit einer anderen Komponente, beispielsweise der ersten oder zweiten Ausgangswelle verbunden sein. In der zweiten Position kann die jeweilige Koppeleinrichtungen mit der anderen Komponente, nicht verbunden sein, also von dieser gelöst oder entkoppelt sein.

Die Koppeleinrichtungen können als eine Kupplung oder Synchronisierung ausgebildet sein, beispielsweise als eine oder eine Schaltkupplung oder eine Lamellenkupplung oder eine Synchronkupplung oder eine schaltbare Freilaufkupplung.

Die Antriebsanordnung kann eine oder mehrere Übersetzungsstufen, insbesondere eine Stirnradstufe oder einen Zahnradsatz oder ein Zahnradpaar umfassen. Die Antriebsanordnung kann 1 bis z Übersetzungsstufen mit z ≤ x umfassen.

Die Antriebsanordnung oder die Arbeitsmaschine oder die Achse kann eine Steuereinheit umfassen. Die Steuereinheit kann mit der ersten und zweiten Energiemaschine signalverbunden und/oder wirkend gekoppelt und/oder signalübertragend und/oder datenleitend verbunden sein. Die Steuereinheit kann konfiguriert sein, eines oder mehrere Drehzahlsignale und/oder Drehmomentsignale von der Antriebsanordnung, insbesondere von Drehzahl- und/oder Drehmomentsensoren der Antriebsanordnung, und/oder der ersten und/oder zweiten Energiemaschine zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die Drehzahl und/oder das Drehmoment der Antriebsanordnung, insbesondere der ersten und zweiten Energiemaschine einzustellen und/oder zu verstellen, insbesondere auch zu betreiben.

Die Koppeleinrichtungen können mit einer Steuereinheit signalverbunden und/oder wirkend gekoppelt und/oder signalübertragend und/oder datenleitend verbunden sein. Im Speziellen kann jeder Koppeleinrichtung ein Ventil oder eine Ventilanordnung, insbesondere ein Steuerventil, oder ein Aktuator zum Ansteuern und/oder Einstellen und/oder Verstellen der jeweiligen zugeordneten Koppeleinrichtung umfassen. Das Ventil oder die Ventilanordnung oder der Aktuator können mit der jeweiligen zugeordneten Koppeleinrichtung verbunden und/oder wirkend gekoppelt sein.

Die Steuereinheit kann mit dem Ventil oder der Ventilanordnung oder dem Aktuator signalverbunden und/oder wirkend gekoppelt und/oder signalübertragend und/oder datenleitend verbunden sein. Die Steuereinheit kann konfiguriert sein, die Koppeleinrichtungen, insbesondere über das oder mit dem jeweiligen zugeordneten Ventil oder der Ventilanordnung oder dem Aktuator, anzusteuern und/oder einzustellen und/oder zu verstellen. Die Steuereinheit kann konfiguriert sein, die Koppeleinrichtung, insbesondere über das oder mit dem jeweiligen zugeordneten Ventil oder die Ventilanordnung oder den Aktuator, in die erste oder zweite Position einzustellen und/oder zu verstellen, insbesondere auch von der ersten in die zweite Position zu bewegen und umgekehrt.

Ein m-Gang-Getriebe mit Schaltung (Umschaltung), insbesondere synchroner Schaltung, zwischen erster und zweiter Energiemaschine kann durch ungerade und gerade Übersetzungszahlen an beiden Energiemaschinen erreicht werden. Für z. B. ein 4-Gang-Synchronschaltgetriebe kann die erste Energiemaschine 1 und 3 und die zweite Energiemaschine die Gänge 2 und 4 aufweisen. Die Anzahl der für ein m-Schaltgetriebe erforderlichen Koppeleinrichtungen ist ebenfalls m, eine für jeden Gang der entsprechenden Energiemaschine.

Die synchronisierte Schaltung des ersten Leistungsausgangs kann nur für die Schaltung eines Gangschalthebels erreicht werden. Für andere Gangschaltvorgänge, um eine synchronisierte Schaltung des Zapfwellenantriebs zu ermöglichen, sind eine höhere Anzahl von Übersetzungsverhältnissen sowie Koppeleinrichtungen für den ersten Leistungsausgang erforderlich.

Wesentlich für die Erfindung ist, dass die Antriebsanordnung somit einen Fahrantrieb und einen ersten Leistungsausgang, bevorzugt einen ersten mechanischen Leistungsausgang und einen mechanischen Fahrantrieb, besonders bevorzugt einen elektrisch angetriebene ersten mechanischen Leistungsausgang und einen elektrisch angetriebene ersten mechanischen Fahrantrieb umfasst. Die erste und zweite Energiemaschine können sowohl den Fahrantrieb als auch den ersten Leistungsausgang abwechselnd antreiben. Dadurch können mehrere Gänge mit der jeweils gewünschten Drehzahl und/oder Drehmoment für die Antriebsanordnung bereitgestellt werden. Ausserdem kann vorteilhafterweise ein synchronisiertes Schalten von Gängen ermöglicht werden, ohne dass tatsächlich ein zweiter Gang für eine der Energiemaschinen erforderlich ist. Vorteilhafterweise kann auch ein nahtloses Schalten von Gängen realisiert werden. Auf ein Getriebe mit veränderbarem Übersetzungsverhältnis kann verzichtet werden. Auf diese Weise erhält man ausserdem vorteilhafterweise einen kompakten Aufbau der Antriebsanordnung. Der Antriebsanordnung können weitere Gänge und Koppeleinrichtungen hinzugefügt werden, sodass eine n-Gang Schaltung realisiert werden kann. Im Speziellen kann insbesondere auch eine n-Gangsynchronisierte und/oder nahtlose Antriebsanordnung realisiert werden.

In Ausgestaltung der Erfindung, umfasst die Antriebsanordnung eine erste und/oder zweite und/oder dritte und/oder vierte Koppeleinrichtung. Die erste Energiemaschine kann mit der ersten Koppeleinrichtung verbunden. Ausserdem kann die erste Energiemaschine mit der ersten Koppeleinrichtung oder über die erste Koppeleinrichtung mit dem Fahrantrieb verbindbar oder verbunden, insbesondere auch lösbar verbunden sein. Dazu kann die erste Antriebswelle mit der ersten Koppeleinrichtung verbunden sein. Alternativ oder zusätzlich kann die zweite Energiemaschine mit der zweiten Koppeleinrichtung verbunden sein. Ausserdem kann die zweite Energiemaschine mit der zweiten Koppeleinrichtung oder über die zweite Koppeleinrichtung mit dem ersten Leistungsausgang verbindbar oder verbunden, insbesondere auch lösbar verbunden sein. Dazu kann die zweite Antriebswelle mit der zweiten Koppeleinrichtung verbunden sein. Die erste Koppeleinrichtung kann mit der ersten Ausgangswelle verbindbar oder verbunden sein.

Die zweite Koppeleinrichtung kann mit der zweiten Ausgangswelle verbindbar oder verbunden sein. Zusätzlich oder alternativ kann die zweite Energiemaschine mit der dritten Koppeleinrichtung verbunden sein. Zusätzlich oder alternativ kann die zweite Energiemaschine mit der oder durch die dritte Koppeleinrichtung mit dem Fahrantrieb verbindbar oder verbunden, insbesondere auch lösbar verbunden sein. Die dritte Koppeleinrichtung kann mit der ersten Ausgangswelle verbindbar oder verbunden sein. Zusätzlich oder alternativ kann die erste Energiemaschine mit der vierten Koppeleinrichtung verbunden sein. Zusätzlich oder alternativ kann die erste Energiemaschine mit der oder durch die vierte Koppeleinrichtung mit dem ersten Leistungsausgang verbindbar oder verbunden, insbesondere auch lösbar verbunden. Die vierte Koppeleinrichtung kann mit der zweiten Ausgangswelle verbindbar oder verbunden sein.

Die erste Energiemaschine kann mit der ersten oder durch die erste Koppeleinrichtung in der ersten Position mit dem Fahrantrieb, insbesondere der ersten Ausgangswelle verbunden sein, und in der zweiten Position nicht mit dem Fahrantrieb, insbesondere der ersten Ausgangswelle, verbunden, also entkoppelt sein. Die zweite Energiemaschine kann mit der zweiten oder durch die zweite Koppeleinrichtung in der ersten Position mit dem ersten Leistungsausgang, insbesondere der zweiten Ausgangswelle, verbunden sein, und in der zweiten Position nicht mit dem ersten Leistungsausgang, insbesondere der zweiten Ausgangswelle, verbunden, also entkoppelt sein.

Die Antriebsanordnung kann eine erste Übersetzungsstufe, insbesondere eine erste Stirnradstufe oder einen ersten Zahnradsatz oder ein erstes Zahnradpaar umfassen. Die erste Energiemaschine kann durch die erste oder mit der ersten Übersetzungsstufe mit der ersten Koppeleinrichtung verbunden sein. Die Antriebsanordnung kann eine zweite Übersetzungsstufe, insbesondere eine zweite Stirnradstufe oder einen zweiten Zahnradsatz oder ein zweites Zahnradpaar umfassen. Die zweite Energiemaschine kann durch die zweite oder mit der zweiten Übersetzungsstufe mit der zweiten Koppeleinrichtung verbunden sein.

Die erste und/oder zweite Koppeleinrichtung können mit der Steuereinheit signalverbunden und/oder wirkend gekoppelt und/oder signalübertragend und/oder datenleitend verbunden sein. Im Speziellen kann die Antriebsanordnung ein erstes Ventil oder eine erste Ventilanordnung, insbesondere ein erstes Steuerventil, oder einen ersten Aktuator zum Ansteuern und/oder Einstellen und/oder Verstellen der ersten Koppeleinrichtung umfassen. Das erste Ventil oder die erste Ventilanordnung oder der erste Aktuator können mit der ersten Koppeleinrichtung verbunden sein. Ebenso kann die Antriebsanordnung ein zweites Ventil oder eine zweite Ventilanordnung, insbesondere ein zweites Steuerventil, oder einen zweiten Aktuator zum Ansteuern und/oder Einstellen und/oder Verstellen der zweiten Koppeleinrichtung umfassen. Das zweite Ventil oder die zweite Ventilanordnung oder der zweite Aktuator können mit der zweite Koppeleinrichtung verbunden sein.

Die Steuereinheit kann mit dem ersten und/oder zweiten Ventil oder der ersten und/oder zweiten Ventilanordnung oder dem ersten und/oder zweiten Aktuator signalverbunden und/oder wirkend gekoppelt und/oder signalübertragend und/oder datenleitend verbunden sein. Die Steuereinheit kann konfiguriert sein, die erste Koppeleinrichtung, insbesondere über das oder mit dem ersten Ventil oder die erste Ventilanordnung oder den ersten Aktuator, anzusteuern und/oder einzustellen und/oder zu verstellen. Die Steuereinheit kann konfiguriert sein, die erste Koppeleinrichtung, insbesondere über das oder mit dem ersten Ventil oder die erste Ventilanordnung oder den ersten Aktuator, in die erste oder zweite Position einzustellen und/oder zu verstellen, insbesondere auch von der ersten in die zweite Position zu bewegen und umgekehrt. Die Steuereinheit kann konfiguriert sein, die zweite Koppeleinrichtung, insbesondere über das oder mit dem zweiten Ventil oder die zweite Ventilanordnung oder den zweiten Aktuator, anzusteuern und/oder einzustellen und/oder zu verstellen. Die Steuereinheit kann konfiguriert sein, die zweite Koppeleinrichtung, insbesondere über das oder mit dem zweiten Ventil oder die zweite Ventilanordnung oder den zweiten Aktuator, in die erste oder zweite Position einzustellen und/oder zu verstellen, insbesondere auch von der ersten in die zweite Position zu bewegen und umgekehrt. Die Antriebsanordnung weist die oben genannten Vorteile auf.

Die erste Energiemaschine kann mit der vierten oder durch die vierte Koppeleinrichtung in der ersten Position mit dem ersten Leistungsausgang, insbesondere der zweiten Ausgangswelle verbunden sein, und in der zweiten Position nicht mit dem ersten Leistungsausgang, insbesondere der zweiten Ausgangswelle, verbunden, also entkoppelt sein. Die zweite Energiemaschine kann mit der dritten oder durch die dritte Koppeleinrichtung in der ersten Position mit dem Fahrantrieb, insbesondere der ersten Ausgangswelle, verbunden sein, und in der zweiten Position nicht mit dem Fahrantrieb, insbesondere der ersten Ausgangswelle, verbunden, also entkoppelt sein.

Die Antriebsanordnung kann eine dritte Übersetzungsstufe, insbesondere eine dritte Stirnradstufe oder einen dritten Zahnradsatz oder ein drittes Zahnradpaar umfassen. Die zweite Energiemaschine kann durch die dritte oder mit der dritten Übersetzungsstufe mit der dritten Koppeleinrichtung verbunden sein. Die Antriebsanordnung kann eine vierte Übersetzungsstufe, insbesondere eine vierte Stirnradstufe oder einen vierten Zahnradsatz oder ein viertes Zahnradpaar umfassen. Die erste Energiemaschine kann durch die vierte oder mit der vierten Übersetzungsstufe mit der vierten Koppeleinrichtung verbunden sein.

Die dritte und/oder vierte Koppeleinrichtung können mit der Steuereinheit signalverbunden und/oder wirkend gekoppelt und/oder signalübertragend und/oder datenleitend verbunden sein. Im Speziellen kann die Antriebsanordnung ein drittes Ventil oder eine dritte Ventilanordnung, insbesondere ein drittes Steuerventil, oder einen dritten Aktuator zum Ansteuern und/oder Einstellen und/oder Verstellen der dritten Koppeleinrichtung umfassen. Das dritte Ventil oder die dritte Ventilanordnung oder der dritte Aktuator können mit der dritten Koppeleinrichtung verbunden sein. Ebenso kann die Antriebsanordnung ein viertes Ventil oder eine vierte Ventilanordnung, insbesondere ein viertes Steuerventil, oder einen vierten Aktuator zum Ansteuern und/oder Einstellen und/oder Verstellen der vierten Koppeleinrichtung umfassen. Das vierte Ventil oder die vierte Ventilanordnung oder der vierte Aktuator können mit der vierten Koppeleinrichtung verbunden sein.

Die Steuereinheit kann mit dem dritten und/oder vierten Ventil oder der dritten und/oder vierten Ventilanordnung oder dem dritten und/oder vierten Aktuator signalverbunden und/oder wirkend gekoppelt und/oder signalübertragend und/oder datenleitend verbunden sein. Die Steuereinheit kann konfiguriert sein, die dritte Koppeleinrichtung, insbesondere über das oder mit dem dritten Ventil oder die dritte Ventilanordnung oder den dritten Aktuator, anzusteuern und/oder einzustellen und/oder zu verstellen. Die Steuereinheit kann konfiguriert sein, die dritte Koppeleinrichtung, insbesondere über das oder mit dem dritten Ventil oder die dritte Ventilanordnung oder den dritten Aktuator, in die erste oder zweite Position einzustellen und/oder zu verstellen, insbesondere auch von der ersten in die zweite Position zu bewegen und umgekehrt. Die Steuereinheit kann konfiguriert sein, die vierte Koppeleinrichtung, insbesondere über das oder mit dem vierten Ventil oder die vierte Ventilanordnung oder den vierten Aktuator, anzusteuern und/oder einzustellen und/oder zu verstellen. Die Steuereinheit kann konfiguriert sein, die vierte Koppeleinrichtung, insbesondere über das oder mit dem vierten Ventil oder die vierte Ventilanordnung oder den vierten Aktuator, in die erste oder zweite Position einzustellen und/oder zu verstellen, insbesondere auch von der ersten in die zweite Position zu bewegen und umgekehrt. Dadurch sind die oben beschriebenen Vorteile der Antriebsanordnung realisierbar.

In Ausgestaltung der Erfindung ist die erste Energiemaschine mit dem Fahrantrieb und die zweite Energiemaschine mit dem ersten Leistungsausgang verbunden, wenn eine Drehzahl der ersten Energiemaschine kleiner als ein oder gleich einem Drehzahlschwellwert ist, bevorzugt wenn eine Drehzahl der ersten Energiemaschine kleiner als der Drehzahlschwellwert ist, und die zweite Energiemaschine ist mit dem Fahrantrieb verbunden, wenn eine Drehzahl der ersten Energiemaschine grösser als der Drehzahlschwellwert ist. Alternativ oder zusätzliche kann die zweite Energiemaschine mit dem Fahrantrieb und dem ersten Leistungsausgang verbunden sein, wenn die Drehzahl der ersten Energiemaschine grösser als der Drehzahlschwellwert ist, oder die zweite Energiemaschine mit dem Fahrantrieb und die erste Energiemaschine mit dem ersten Leistungsausgang verbunden sein, wenn die Drehzahl der ersten Energiemaschine grösser als der Drehzahlschwellwert ist. Im Speziellen kann insbesondere nur die erste Energiemaschine, mit dem Fahrantrieb und insbesondere nur die zweite Energiemaschine mit dem ersten Leistungsausgang verbunden sein, wenn ein Drehmoment der ersten Energiemaschine kleiner als der oder gleich dem Drehmomentschwellwert ist und/oder eine Drehzahl der ersten Energiemaschine kleiner als der oder gleich dem Drehzahlschwellwert ist, bevorzugt, wenn ein Drehmoment der ersten Energiemaschine kleiner als der Drehmomentschwellwert ist und/oder eine Drehzahl der ersten Energiemaschine kleiner als der Drehzahlschwellwert ist. Alternativ oder zusätzlich kann insbesondere nur die zweite Energiemaschine mit dem Fahrantrieb verbunden sein, wenn ein Drehmoment der ersten Energiemaschine grösser als der Drehmomentschwellwert ist und/oder eine Drehzahl der ersten Energiemaschine grösser als der Drehzahlschwellwert ist.

Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die ermittelte Drehzahl und/oder das ermittelte Drehmoment mit dem Drehzahlschwellwert $n_{schwell}$ und/oder dem Drehmomentschwellwert $T_{schwell}$ zu vergleichen. Die Steuereinheit kann konfiguriert sein, die Antriebsanordnung, insbesondere die erste und zweite Energiemaschine, in Abhängigkeit von der Drehzahl und/oder dem Drehmoment in den ersten oder zweiten Modus einzustellen und/oder zu verstellen, insbesondere im ersten oder zweiten Modus zu betreiben. Die Steuereinheit kann konfiguriert sein, die Antriebsanordnung, insbesondere die erste und zweite Energiemaschine, in Abhängigkeit von der Drehzahl und/oder dem Drehmoment in den ersten Modus einzustellen und/oder zu verstellen, insbesondere im ersten Modus zu betreiben, wenn das Drehmoment der ersten Energiemaschine kleiner als der oder gleich dem Drehmomentschwellwert ist und/oder die Drehzahl der ersten Energiemaschine kleiner als der oder gleich dem Drehzahlschwellwert ist, wenn das Drehmoment der ersten Energiemaschine kleiner als der Drehmomentschwellwert ist und/oder die Drehzahl der ersten Energiemaschine kleiner als der Drehzahlschwellwert ist. Alternativ oder zusätzlich, kann die Steuereinheit konfiguriert sein, die Antriebsanordnung, insbesondere die erste und zweite Energiemaschine, in Abhängigkeit von der Drehzahl und/oder dem Drehmoment in den zweiten Modus einzustellen und/oder zu verstellen, insbesondere im zweiten Modus zu betreiben, wenn das Drehmoment der ersten Energiemaschine grösser als der Drehmomentschwellwert ist und/oder die Drehzahl der ersten Energiemaschine grösser als der Drehzahlschwellwert ist. Die Steuereinheit kann konfiguriert sein, die Antriebsanordnung und somit auch die Arbeitsmaschine mit dem oder in Abhängigkeit von der Drehzahl und/oder Drehmoment der ersten Energiemaschine einzustellen und/oder zu verstellen und/oder anzusteuern, insbesondere also auch zu steuern und zu regeln. Die Steuereinheit kann also konfiguriert sein, die Energie und/oder das Drehmoment und/oder die Kraft und/oder die Drehzahl der Antriebsanordnung, insbesondere der ersten und zweiten Energiemaschine in Abhängigkeit von der Drehzahl und/oder Drehmoment einzustellen und/oder zu verstellen, insbesondere zu erhöhen oder zu verringern.

Aufgrund der Einteilung, dass das Drehmoment der ersten Energiemaschine kleiner als der Drehmomentschwellwert oder grösser als der bzw. gleich dem Drehmomentschwellwert sein kann und/oder die Drehzahl der ersten Energiemaschine kleiner oder grösser als der bzw. gleich dem Drehzahlschwellwert sein kann, werden zwei Modi der Antriebsanordnung und/oder der Arbeitsmaschine definiert. Mit anderen Worten, es werden zwei Geschwindigkeitsbereiche der Antriebsanordnung und/oder der Arbeitsmaschine definiert. Der erste Modus oder der erste Geschwindigkeitsbereich liegt vor, wenn das Drehmoment der ersten Energiemaschine kleiner als der oder gleich dem Drehmomentschwellwert ist und/oder die Drehzahl der ersten Energiemaschine kleiner als der oder gleich dem Drehzahlschwellwert ist, also wenn gilt:

$$n \leq n_{schwell} \text{ und/oder } T \leq T_{schwell}$$

oder wenn das Drehmoment der ersten Energiemaschine kleiner als der Drehmomentschwellwert ist und/oder die Drehzahl der ersten Energiemaschine kleiner als der Drehzahlschwellwert ist, also wenn gilt:

$$n < n_{schwell} \text{ und/oder } T < T_{schwell}$$

mit

n = Drehzahl der ersten Energiemaschine
$n_{schwell}$ = Drehzahlschwellwert, insbesondere die max. Drehzahl der ersten Energiemaschine
$T$ = Drehmoment der ersten Energiemaschine
$T_{schwell}$ = Drehmomentschwellwert, insbesondere das max. Drehmoment der ersten Energiemaschine

Ein Schaltpunkt kann vorliegen, wenn $n = n_{schwell}$ und/oder $T = T_{schwell}$ gilt. Entspricht die Drehzahl $n$ der ersten Energiemaschine also dem Drehzahlschwellwert $n_{schwell}$ , gilt also insbesondere $n = n_{schwell}$, und/oder entspricht das Drehmoment $T$ dem Drehmomentschwellwert $T_{schwell}$, gilt also $T = T_{schwell}$, erfolgt ein Gangwechsel, insbesondere ein synchronisierter Gangwechsel in den zweiten Modus oder den zweiten Geschwindigkeitsbereich. Der Gangwechsel kann unter Volllast und ohne Unterbrechung der Zugkraft erfolgen, und insbesondere nahtlos (engl. Seamless) erfolgen. Die erste und zweite Energiemaschine können im Schaltpunkt die gleiche Drehzahl aufweisen, also insbesondere wenn $n = n_{schwell}$ und/oder $T = T_{schwell}$ gilt. Aufgrund der nahtlosen Schaltung können Vibrationen und/oder ein Schütteln (engl. Shift-Shock) der Antriebsanordnung vermieden werden.

Der zweite Modus oder der zweite Geschwindigkeitsbereich liegt vor, wenn das Drehmoment der ersten Energiemaschine grösser als der Drehmomentschwellwert ist und/oder die Drehzahl der ersten Energiemaschine grösser als der Drehzahlschwellwert ist, also wenn gilt:

$$n > n_{schwell} \text{ und/oder } T > T_{schwell}$$

mit

n = Drehzahl der ersten Energiemaschine
$n_{schwell}$ = Drehzahlschwellwert, insbesondere die max. Drehzahl der ersten Energiemaschine
$T$ = Drehmoment der ersten Energiemaschine
$T_{schwell}$ = Drehmomentschwellwert, insbesondere das max. Drehmoment der ersten Energiemaschine

Im ersten Modus oder dem ersten Geschwindigkeitsbereich gilt folgendes, insbesondere kann im ersten Modus oder dem ersten Geschwindigkeitsbereich die Antriebsanordnung wie folgt betreibbar sein:

- Die erste Energiemaschine, insbesondere nur die erste Energiemaschine, ist mit dem Fahrantrieb verbunden, insbesondere gekoppelt und der Fahrantrieb mit der ersten Energiemaschine antreibbar. Die erste Energiemaschine kann somit als einzige Maschine Drehmoment und/oder Drehzahl, also insbesondere Traktion, für den Fahrantrieb bereitstellen. Dadurch kann vorteilhafterweise die Antriebsanordnung, und insbesondere bei niedrigen Geschwindigkeiten ($n < n_{schwell}$ und/oder $T < T_{schwell}$) die Arbeitsmaschine, mit einem konstanten Einzelübersetzungsverhältnis verwendet werden. Ausserdem kann ein hohes Traktionsmoment und eine hohe Zugkraft der Arbeitsmaschine bei niedrigen Geschwindigkeiten ermöglicht werden.
- Die zweite Energiemaschine, insbesondere nur die zweite Energiemaschine, ist mit dem ersten Leistungsausgang verbunden, insbesondere gekoppelt und der ersten Leistungsausgang mit der zweiten Energiemaschine antreibbar. Diese kann dadurch vorteilhafterweise als einzige Maschine Drehmoment und/oder Drehzahl für den ersten Leistungsausgang bereitstellen.

Im zweiten Modus oder dem ersten Geschwindigkeitsbereich gilt folgendes, insbesondere kann im zweiten Modus oder dem zweiten Geschwindigkeitsbereich die Antriebsanordnung wie folgt betreibbar sein:

- Die zweite Energiemaschine, insbesondere nur die zweite Energiemaschine, ist mit dem Fahrantrieb verbunden, insbesondere gekoppelt und der Fahrantrieb mit der zweiten Energiemaschine antreibbar. Die erste Energiemaschine kann vom Fahrantrieb entkoppelt sein.
- Ab dieser Drehzahl und/oder diesem Drehmoment stellt die erste Energiemaschine kein Drehmoment und/oder Drehzahl, also insbesondere keine Traktion, mehr für den Fahrantrieb bereit und nur die zweite Energiemaschine stellt das Drehmoment und/oder die Drehzahl, also insbesondere die vollständige Traktion für den Fahrantrieb bereit.
- Zusätzlich kann die erste Energiemaschine, insbesondere nur die erste Energiemaschine, mit dem ersten Leistungsausgang verbunden sein, insbesondere gekoppelt und der ersten Leistungsausgang mit der ersten Energiemaschine antreibbar sein. Diese kann dadurch vorteilhafterweise als einzige Maschine Drehmoment und/oder Drehzahl für den ersten Leistungsausgang bereitstellen. Je nach gewählten Übersetzungsverhältnissen, kann dadurch vorteilhafterweise auch eine synchronisierte Schaltung des ersten Leistungsausgangs erreicht werden.

Mit anderen Worten, die Steuereinheit kann mit der ersten und zweiten Energiemaschine signalverbunden und/oder wirkend gekoppelt und/oder signalübertragend und/oder datenleitend verbunden sein. Die Steuereinheit kann konfiguriert sein, eines oder mehrere Drehzahlsignale und/oder Drehmomentsignale von der Antriebsanordnung, insbesondere von Drehzahl- und/oder Drehmomentsensoren der Antriebsanordnung, und/oder der ersten und/oder zweiten Energiemaschine zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die ermittelte Drehzahl und/oder das ermittelte Drehmoment mit dem Drehzahlschwellwert $n_{schwell}$ und/oder dem Drehmomentschwellwert $T_{schwell}$ zu vergleichen. Die Steuereinheit kann konfiguriert sein, die Drehzahl und/oder das Drehmoment der Antriebsanordnung, insbesondere der ersten und zweiten Energiemaschine einzustellen und/oder zu verstellen, insbesondere auch zu betreiben. Die Steuereinheit kann konfiguriert sein, die Antriebsanordnung, insbesondere die erste und zweite Energiemaschine, in Abhängigkeit von der Drehzahl und/oder dem Drehmoment in den ersten oder zweiten Modus einzustellen und/oder zu verstellen, insbesondere im ersten oder zweiten Modus zu betreiben. Die Steuereinheit kann konfiguriert sein, die Antriebsanordnung, insbesondere die erste und zweite Energiemaschine, in Abhängigkeit von der Drehzahl und/oder dem Drehmoment in den ersten Modus einzustellen und/oder zu verstellen, insbesondere im ersten Modus zu betreiben, wenn das Drehmoment der ersten Energiemaschine kleiner als der Drehmomentschwellwert ist und/oder die Drehzahl der ersten Energiemaschine kleiner als der Drehzahlschwellwert ist. Alternativ oder zusätzlich, kann die Steuereinheit konfiguriert sein, die Antriebsanordnung, insbesondere die erste und zweite Energiemaschine, in Abhängigkeit von der Drehzahl und/oder dem Drehmoment in den zweiten Modus einzustellen und/oder zu verstellen, insbesondere im zweiten Modus zu betreiben, wenn das Drehmoment der ersten Energiemaschine grösser als der Drehmomentschwellwert ist und/oder die Drehzahl der ersten Energiemaschine grösser als der Drehzahlschwellwert ist. Die Steuereinheit kann konfiguriert sein, die Antriebsanordnung und somit auch die Arbeitsmaschine mit dem oder in Abhängigkeit von der Drehzahl und/oder Drehmoment der ersten Energiemaschine einzustellen und/oder zu verstellen und/oder anzusteuern, insbesondere also auch zu steuern und zu regeln. Die Steuereinheit kann also konfiguriert sein, die Energie und/oder das Drehmoment und/oder die Kraft und/oder die Drehzahl der Antriebsanordnung, insbesondere der ersten und zweiten Energiemaschine in Abhängigkeit von der Drehzahl und/oder Drehmoment einzustellen und/oder zu verstellen, insbesondere zu erhöhen oder zu verringern.

Die Antriebsanordnung weist die oben genannten Vorteile auf. Darüber hinaus ermöglichen diese Massnahmen vorteilhafterweise die Schaltung von verschiedenen Stufen oder Gängen oder Übersetzungen. Wie in Tabelle 1 beispielhaft dargestellt, können je nachdem wie die Koppeleinheiten geschaltet sind, sich also in der ersten oder zweiten Position befinden, nur Fahrantrieb, nur erster Leistungsausgang oder Fahrantrieb und erster Leistungsausgang oder verstärkter Fahrantrieb und/oder verstärkter erster Leistungsausgang verwendet werden. Die unterschiedlichen Drehzahlen des Fahrantriebs und/oder des ersten Leistungsausgangs oder die Geschwindigkeit der Arbeitsmaschine hängen von den zwischen der ersten und zweiten Energiemaschine gewählten Übersetzungsverhältnissen ab. Außerdem kann je nach Übersetzungsverhältnis der Fahrbereich eingeschränkt werden. Darüber hinaus basieren beispielsweise die in Tabelle 1 gezeigten Modi auf einer zweiten Energiemaschine mit höher Leistung als die erste Energiemaschine. Je nach Auslegung der Übersetzungsstufen und der Energiemaschinen muss, um eine synchronisierte Schaltung der Antriebsanordnung zu erreichen, eine bestimmte Reihenfolge eingehalten werden, wie die Koppeleinrichtungen geschaltet werden.

Tabelle 1: Die verschiedenen Stufen der Antriebsanordnung mit vier Koppeleinrichtungen

| Stufe | K1 | K2 | K3 | K4 | Zustand | Modus |
|---|---|---|---|---|---|---|
| 1 | Geschlossen | Geöffnet | Geöffnet | Geöffnet | Antrieb EM1 - Fahrantrieb | Nur Fahren |
| 2 | Geöffnet | Geöffnet | Geschlossen | Geöffnet | Antrieb EM2 - Fahrantrieb | Nur Fahren |
| 3 | Geschlossen | Geöffnet | Geschlossen | Geöffnet | Antrieb EM1 und EM2 - Fahrantrieb | Leistungssteigerung Fahren |
| 4 | Geöffnet | Geschlossen | Geöffnet | Geöffnet | Antrieb EM2 - erster Leistungsausgang | Nur Leistungsausgang |

(fortgesetzt)

| Stufe | K1 | K2 | K3 | K4 | Zustand | Modus |
|---|---|---|---|---|---|---|
| 5 | Geöffnet | Geöffnet | Geöffnet | Geschlossen | Antrieb EM1 - erster Leistungsausgang | Nur Leistungsausgang |
| 6 | Geöffnet | Geschlossen | Geöffnet | Geschlossen | Antrieb EM1 und EM2 - erster Leistungsausgang | Leistungssteigerung erster Leistungsausgang |
| 7 | Geschlossen | Geschlossen | Geöffnet | Geöffnet | Antrieb EM1 - Fahrantrieb und EM2 - erster Leistungsausgang | Fahren und Leistungsausgang |
| 8 | Geöffnet | Geöffnet | Geschlossen | Geschlossen | Antrieb EM2 - Fahrantrieb und EM1 - erster Leistungsausgang | Fahren und Leistungsausgang |
| 9 | Geschlossen | Geschlossen | Geschlossen | Geöffnet | Antrieb EM1 und EM2 - Fahrantrieb und EM2 - erster Leistungsausgang | Leistungssteigerung Fahren und Leistungsausgang |
| 10 | Geschlossen | Geschlossen | Geöffnet | Geschlossen | Antrieb EM1 - Fahrantrieb und EM1 und EM2-erster Leistungsausgang | Leistungssteigerung Fahren und Leistungsausgang |
| 11 | Geöffnet | Geschlossen | Geschlossen | Geschlossen | Antrieb EM2 - Fahrantrieb und EM1 und EM2-erster Leistungsausgang | Leistungssteigerung Fahren und Leistungsausgang |
| 12 | Geöffnet | Geschlossen | Geschlossen | Geöffnet | Antrieb EM2 - Fahrantrieb und erster Leistungsausgang | Leistungsausgang hohe Drehzahl |
| 13 | Geschlossen | Geöffnet | Geöffnet | Geschlossen | Antrieb EM1 - Fahrantrieb und erster Leistungsausgang | Leistungsausgang niedrige Drehzahl |
| 14 | Geöffnet | Geöffnet | Geöffnet | Geöffnet | Neutral, kein Antrieb | Neutral |

Im Speziellen können m Modi oder Geschwindigkeitsbereiche der Antriebsanordnung und/oder der Arbeitsmaschine und/oder der Achse definiert sein. Die Anzahl der Modi kann also der Anzahl der Fahrstufen entsprechen.

Der m-1 Modus oder der m-1 Geschwindigkeitsbereich kann dann vorliegen, wenn das Drehmoment der ersten Energiemaschine kleiner als ein m-ter oder gleich einem m-ten Drehmomentschwellwert $T_{schwell,m}$ ist und/oder die Drehzahl der ersten Energiemaschine kleiner als ein m-ter oder gleich einem m-ten Drehzahlschwellwert $n_{schwell,m}$ ist, also wenn gilt:

$$n_{schwell,m-1} > n \leq n_{schwell,m}$$

und/oder

$$T_{schwell,m-1} > T \le T_{schwell,m}$$

bevorzugt wenn gilt:

$$n_{schwell,m-1} > n < n_{schwell,m}$$

und/oder

$$T_{schwell,m-1} > T < T_{schwell,m}$$

mit

n = Drehzahl der ersten Energiemaschine

$n_{schwell,m}$ = m Drehzahlschwellwert

$n_{schwell,m-1}$ = m-1 Drehzahlschwellwert mit $n_{schwell,0}$ = 0

T = Drehmoment der ersten Energiemaschine

$T_{schwell,m}$ = m Drehmomentschwellwert

$T_{schwell,m-1}$ = m-1 Drehmomentschwellwert mit $T_{schwell,0}$ = 0

Ein Schaltpunkt in den m-1 Modus liegt vor, wenn $n = n_{schwell,m-1}$ und/oder $T = T_{schwell,m-1}$. Ein Schaltpunkt in den m Modus liegt vor, wenn $n = n_{schwell,m}$ und/oder $T = T_{schwell,m}$ gilt. Entspricht die Drehzahl n der ersten Energiemaschine also einem der Drehzahlschwellwerte und/oder Drehmomentschwellwerte erfolgt ein Gangwechsel, insbesondere ein synchronisierter Gangwechsel in den nächsten oder vorherigen Modus oder Geschwindigkeitsbereich. Der Gangwechsel kann unter Volllast und ohne Unterbrechung der Zugkraft erfolgen, und insbesondere nahtlos (engl. Seamless) erfolgen. Die erste und zweite Energiemaschine können im Schaltpunkt die gleiche Drehzahl aufweisen Aufgrund der nahtlosen Schaltung können Vibrationen und/oder ein Schütteln (engl. Shift-Shock) der Antriebsanordnung vermieden werden.

Die Steuereinheit kann konfiguriert sein, die ermittelte Drehzahl und/oder das ermittelte Drehmoment mit dem Drehzahlschwellwert $n_{schwell,m}$ und/oder dem Drehmomentschwellwert $T_{schwell,m}$ zu vergleichen. Die Steuereinheit kann konfiguriert sein, die Antriebsanordnung, insbesondere die erste und zweite Energiemaschine, in Abhängigkeit von der Drehzahl und/oder dem Drehmoment in die m Modi einzustellen und/oder zu verstellen, insbesondere zu betreiben. Die Steuereinheit kann konfiguriert sein, die Antriebsanordnung, insbesondere die erste und zweite Energiemaschine, in Abhängigkeit von der Drehzahl und/oder dem Drehmoment in den m-1 Modus einzustellen und/oder zu verstellen, insbesondere im m-1 Modus zu betreiben, wenn das Drehmoment der ersten Energiemaschine kleiner als der oder gleich dem Drehmomentschwellwert $T_{schwell,m}$ ist und/oder die Drehzahl der ersten Energiemaschine kleiner als der oder gleich dem Drehzahlschwellwert $n_{schwell,m}$ ist. Alternativ oder zusätzlich, kann die Steuereinheit konfiguriert sein, die Antriebsanordnung, insbesondere die erste und zweite Energiemaschine, in Abhängigkeit von der Drehzahl und/oder dem Drehmoment in den m Modus einzustellen und/oder zu verstellen, insbesondere im m Modus zu betreiben, wenn das Drehmoment der ersten Energiemaschine grösser als der Drehmomentschwellwert $T_{schwell,m}$ ist und/oder die Drehzahl der ersten Energiemaschine grösser als der Drehzahlschwellwert $n_{schwell,m}$ ist.

Bei einer möglichen Ausführungsform umfasst die Antriebsanordnung einen zweiten Leistungsausgang, insbesondere einen zweiten mechanischen Leistungsausgang. Der zweite Leistungsausgang kann die Hydraulik, insbesondere die Hydraulik der Arbeitsmaschine antreiben. Der zweite Leistungsausgang kann die zweite Ausgangswelle mit dem ersten Leistungsausgang gemeinsam umfassen. Alternativ kann der zweite Leistungsausgang eine dritte Ausgangswelle umfassen und/oder als dritte Ausgangswelle ausgebildet sein. Ebenso kann der zweite Leistungsausgang eine Pumpen- und/oder Kompressor-Einheit oder eine weitere Zapfwelleneinheit sein, die wie die Zapfwelleneinheit ausgebildet sein kann. Vorteilhafterweise können dadurch insgesamt zwei Leistungsausgänge und der Fahrantrieb realisiert und/oder unabhängig voneinander betrieben werden

In Ausgestaltung der Erfindung ist die erste Energiemaschine, insbesondere nur die erste Energiemaschine, mit dem Fahrantrieb verbunden und die zweite Energiemaschine, insbesondere nur die zweite Energiemaschine, ist mit dem ersten und/oder zweiten Leistungsausgang verbunden, wenn ein Drehmoment der ersten Energiemaschine kleiner als der oder gleich dem Drehmomentschwellwert ist und/oder eine Drehzahl der ersten Energiemaschine kleiner als der oder gleich dem Drehzahlschwellwert ist, bevorzugt wenn ein Drehmoment der ersten Energiemaschine kleiner als der Drehmomentschwellwert ist und/oder eine Drehzahl der ersten Energiemaschine kleiner als der Drehzahlschwellwert ist Somit kann im ersten Modus oder dem ersten Geschwindigkeitsbereich folgendes gelten, insbesondere kann im ersten Modus oder dem ersten Geschwindigkeitsbereich die Antriebsanordnung wie folgt betreibbar sein:

- Die erste Energiemaschine kann mit dem Fahrantrieb verbunden, insbesondere gekoppelt sein und diesen antreiben.

- Die zweite Energiemaschine kann mit dem ersten und/oder zweiten Leistungsausgang verbunden, insbesondere gekoppelt sein und diese(n) antreiben.

Im zweiten Modus oder dem ersten Geschwindigkeitsbereich, also wenn ein Drehmoment der ersten Energiemaschine grösser als der Drehmomentschwellwert ist und/oder eine Drehzahl der ersten Energiemaschine grösser als der Drehzahlschwellwert ist, kann folgendes gelten, insbesondere kann im zweiten Modus oder dem zweiten Geschwindigkeitsbereich die Antriebsanordnung wie folgt betreibbar sein:

- Alternativ oder zusätzlich kann die zweite Energiemaschine, insbesondere nur die zweite Energiemaschine, mit dem Fahrantrieb verbunden sein. Somit kann insbesondere die zweite Energiemaschine mit dem Fahrantrieb gekoppelt sein und diesen antreiben.
- Alternativ oder zusätzlich kann die erste Energiemaschine nicht mit dem Fahrantrieb verbunden, insbesondere vom Fahrantrieb entkoppelt sein.
- Alternativ oder zusätzlich kann die erste Energiemaschine mit dem ersten und/oder zweiten Leistungsausgang verbunden sein. Somit kann insbesondere die erste Energiemaschine mit dem ersten und/oder zweiten Leistungsausgang gekoppelt sein und diese antreiben.
- Alternativ oder zusätzlich kann die zweite Energiemaschine mit dem Fahrantrieb und dem ersten und/oder zweiten Leistungsausgang verbunden sein. Somit kann insbesondere die zweite Energiemaschine mit dem Fahrantrieb und dem ersten und/oder zweiten Leistungsausgang gekoppelt sein und diese(n) antreiben.

Die Antriebsanordnung kann eine fünfte Koppeleinrichtung umfassen. Die zweite Energiemaschine kann mit der fünften Koppeleinrichtung verbunden sein. Ausserdem kann die zweite Energiemaschine mit der oder durch die fünfte Koppeleinrichtung mit dem zweiten Leistungsausgang verbindbar oder verbunden sein. Die fünfte Koppeleinrichtung kann mit der zweiten oder dritten Ausgangswelle verbindbar oder verbunden sein.

Die fünfte Koppeleinrichtung kann jeweils zwischen einer ersten Position, insbesondere einem geschlossenen oder verbundenem oder gekoppelten Zustand, und einer zweiten Position, insbesondere einem geöffneten oder nicht verbundenem oder entkoppelten Zustand, bewegbar sein. In der ersten Position kann die fünfte Koppeleinrichtungen mit einer anderen Komponente, beispielsweise der zweiten oder dritten Ausgangswelle, verbunden sein. In der zweiten Position kann die fünfte Koppeleinrichtungen mit der anderen Komponente nicht verbunden sein, also von dieser gelöst sein.

Die zweite Energiemaschine kann mit der fünften oder durch die fünfte Koppeleinrichtung in der ersten Position mit dem zweiten Leistungsausgang, insbesondere der zweiten oder dritten Ausgangswelle verbunden sein, und in der zweiten Position nicht mit dem zweiten oder dritten Leistungsausgang, insbesondere der zweiten oder dritten Ausgangswelle, verbunden, also entkoppelt sein.

Die fünfte Koppeleinrichtung kann als eine Kupplung oder Synchronisierung ausgebildet sein, beispielsweise als eine oder eine Schaltkupplung oder eine Lamellenkupplung oder eine Synchronkupplung oder eine schaltbare Freilaufkupplung.

Die Antriebsanordnung kann eine fünfte Übersetzungsstufe, insbesondere eine fünfte Stirnradstufe oder einen fünften Zahnradsatz oder ein fünftes Zahnradpaar umfassen. Die zweite Energiemaschine kann durch die fünfte oder mit der fünften Übersetzungsstufe mit der fünften Koppeleinrichtung verbunden sein.

Die fünfte Koppeleinrichtung kann mit der Steuereinheit signalverbunden und/oder wirkend gekoppelt und/oder signalübertragend und/oder datenleitend verbunden sein. Im Speziellen kann die Antriebsanordnung ein fünftes Ventil oder eine fünfte Ventilanordnung, insbesondere ein fünftes Steuerventil, oder einen fünften Aktuator zum Ansteuern und/oder Einstellen und/oder Verstellen der fünften Koppeleinrichtung umfassen. Das fünfte Ventil oder die fünfte Ventilanordnung oder der fünfte Aktuator können mit der fünften Koppeleinrichtung verbunden sein.

Die Steuereinheit kann mit dem fünften Ventil oder der fünften Ventilanordnung oder dem fünften Aktuator signalverbunden und/oder wirkend gekoppelt und/oder signalübertragend und/oder datenleitend verbunden sein. Die Steuereinheit kann konfiguriert sein, die fünfte Koppeleinrichtung, insbesondere über das oder mit dem fünften Ventil oder die fünfte Ventilanordnung oder den fünften Aktuator, anzusteuern und/oder einzustellen und/oder zu verstellen. Die Steuereinheit kann konfiguriert sein, die fünfte Koppeleinrichtung, insbesondere über das oder mit dem fünften Ventil oder die fünfte Ventilanordnung oder den fünften Aktuator, in die erste oder zweite Position einzustellen und/oder zu verstellen, insbesondere auch von der ersten in die zweite Position zu bewegen und umgekehrt. Die Antriebsanordnung weist die oben genannten Vorteile auf.

In Ausgestaltung der Erfindung umfasst die Antriebsanordnung einen dritten Energiemaschine. Die erste Energiemaschine, insbesondere nur die erste Energiemaschine, mit dem Fahrantrieb und die zweite Energiemaschine, insbesondere nur die zweite Energiemaschine, mit dem ersten Leistungsausgang und die dritte Energiemaschine, insbesondere nur die dritte Energiemaschine, mit dem zweiten Leistungsausgang verbunden ist, wenn ein Drehmoment der ersten Energiemaschine kleiner als der oder gleich dem Drehmomentschwellwert ist und/oder eine Drehzahl der ersten Energiemaschine kleiner als der oder gleich dem Drehzahlschwellwert ist, bevorzugt wenn ein Drehmoment der ersten Energiemaschine kleiner als der Drehmomentschwellwert ist und/oder eine Drehzahl der ersten Energiemaschine kleiner als der Drehzahlschwellwert ist. Der oder die Energiespeicher kann mit der dritten Energiemaschine verbunden und/oder koppelbar sein, insbesondere elektrisch verbunden und/oder elektrisch koppelbar sein.

Die dritte Energiemaschine kann als ein Elektromotor, insbesondere als ein dritter Elektromotor ausgebildet sein. Die dritte Energiemaschine kann aber auch eine Brennstoffzelle oder bevorzugt eine mit Gleichstrom und/oder Drehstrom betriebene Synchron- und/oder Asynchronmaschine mit permanenter und/oder elektrischer Erregung, besonders bevorzugt eine permanenterregte Drehstrom-Synchronmaschine sein. Die dritte Energiemaschine kann motorisch oder generatorisch betreibbar sein. Die dritte Energiemaschine kann die Antriebsanordnung mit einer Drehzahl und/oder einem Drehmoment antreiben. Die dritte Energiemaschine, insbesondere der dritte Elektromotor, kann ein dritte Antriebswelle umfassen.

Somit kann im ersten Modus oder dem ersten Geschwindigkeitsbereich folgendes gelten, insbesondere kann im ersten Modus oder dem ersten Geschwindigkeitsbereich die Antriebsanordnung wie folgt betreibbar sein:

- Die erste Energiemaschine kann mit dem Fahrantrieb verbunden, insbesondere gekoppelt sein und diesen antreiben.
- Die zweite Energiemaschine kann mit dem ersten Leistungsausgang verbunden, insbesondere gekoppelt sein und diesen antreiben.
- Die dritte Energiemaschine kann mit dem zweiten Leistungsausgang verbunden, insbesondere gekoppelt sein und diesen antreiben.

Im zweiten Modus oder dem zweiten Geschwindigkeitsbereich, also wenn ein Drehmoment der ersten Energiemaschine grösser als der Drehmomentschwellwert ist und/oder eine Drehzahl der ersten Energiemaschine grösser als der Drehzahlschwellwert ist, kann folgendes gelten, insbesondere kann im zweiten Modus oder dem zweiten Geschwindigkeitsbereich die Antriebsanordnung wie folgt betreibbar sein:

- Alternativ oder zusätzlich kann die zweite Energiemaschine, insbesondere nur die zweite Energiemaschine, mit dem Fahrantrieb verbunden sein. Somit kann insbesondere die zweite Energiemaschine mit dem Fahrantrieb gekoppelt sein und diesen antreiben.
- Alternativ oder zusätzlich kann die erste Energiemaschine nicht mit dem Fahrantrieb verbunden, insbesondere vom Fahrantrieb entkoppelt sein.
- Alternativ oder zusätzlich kann die erste Energiemaschine mit dem ersten und/oder zweiten Leistungsausgang verbunden sein. Somit kann insbesondere die erste Energiemaschine mit dem ersten und/oder zweiten Leistungsausgang gekoppelt sein und diese antreiben.
- Alternativ oder zusätzlich kann die dritte Energiemaschine mit dem ersten und/oder zweiten Leistungsausgang verbunden sein. Somit kann insbesondere die dritte Energiemaschine mit dem ersten und/oder zweiten Leistungsausgang gekoppelt sein und diese antreiben.
- Alternativ oder zusätzlich kann die zweite Energiemaschine mit dem Fahrantrieb und dem ersten und/oder zweiten Leistungsausgang verbunden sein. Somit kann insbesondere die zweite Energiemaschine mit dem Fahrantrieb und dem ersten und/oder zweiten Leistungsausgang gekoppelt sein und diese(n) antreiben.

Alternativ kann anstatt der zweiten Energiemaschine die dritte Energiemaschine mit der fünften Koppeleinrichtung verbunden sein. Ausserdem kann die dritte Energiemaschine mit der oder durch die fünfte Koppeleinrichtung mit dem zweiten Leistungsausgang, insbesondere der zweiten oder dritten Ausgangswelle, verbindbar oder verbunden sein. Alternativ kann anstatt der zweiten Energiemaschine die dritte Energiemaschine mit der fünften Koppeleinrichtung verbunden sein.

In Ausgestaltung der Erfindung umfasst der erste Leistungsausgang ein erstes Winkelgetriebe und/oder der zweite Leistungsausgang ein zweites Winkelgetriebe. In Ausgestaltung der Erfindung sind der erste Elektromotor und der Fahrantrieb, insbesondere die erste Ausgangswelle, und/oder der zweite Elektromotor und der Fahrantrieb, insbesondere die erste Ausgangswelle, und/oder dritte Elektromotor und der Fahrantrieb, insbesondere die erste Ausgangswelle, koaxial oder parallel zueinander angeordnet. Im Speziellen können die Rotationsachsen des ersten Elektromotors und/oder des zweiten Elektromotors und/oder des dritten Elektromotors und des Fahrantriebs, insbesondere die erste Ausgangswelle, koaxial oder parallel zueinander angeordnet.

Die Erfindung betrifft weiter eine Achse, insbesondere eine elektrisch angetriebene Achse, für eine Arbeitsmaschine, umfassend eine Antriebsanordnung, insbesondere eine Antriebsanordnung nach einem der Ansprüche 1 bis 9.

Die Erfindung betrifft weiter eine Arbeitsmaschine, umfassend eine Achse, insbesondere eine Achse nach Anspruch 10, und/oder eine Antriebsanordnung, insbesondere eine Antriebsanordnung nach einem der Ansprüche 1 bis 9. Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile der Antriebsanordnung auf.

Die Arbeitsmaschine umfasst die Antriebsanordnung. Die Antriebsanordnung ist zum Antreiben der Arbeitsmaschine ausgebildet. Die Arbeitsmaschine kann eine, zwei oder mehrere Achse(n) umfassen. Im Speziellen kann die Arbeitsmaschine eine erste und eine zweite Fahrzeugachse umfassen. Die Achse, insbesondere in die erste und/oder zweite Fahrzeugachse kann die Antriebsanordnung umfassen. Im Speziellen kann die Antriebsanordnung in die Achse, insbesondere in die erste und/oder zweite Fahrzeugachse integriert sein. Die Arbeitsmaschine kann mit einer Drehzahl und/oder Kraft und/oder einem Drehmoment der ersten und/oder zweiten und/oder dritten Energiemaschine antreibbar sein. Die erste Fahrzeugachse kann dabei eine Vorderachse, insbesondere eine lenkbare Vorderachse, und/oder die zweite Fahrzeugachse eine Hinterachse sein.

Die Steuereinheit kann zur Steuerung und/oder Regelung, insbesondere zum Einstellen und/oder Verstellen, der Arbeitsmaschine, insbesondere des ersten und zweiten Modus, eingerichtet sein. Die Arbeitsmaschine kann eine Ein- und Ausgabeeinheit umfassen. Die Steuereinheit kann mit der Ein- und Ausgabeeinheit signalverbunden und/oder wirkend gekoppelt und/oder signalübertragend und/oder datenleitend verbunden sein, und/oder mit der Ein- und Ausgabeeinheit ansteuerbar und/oder einstellbar und/oder verstellbar sein. Die Ein- und Ausgabeeinheit kann in die Steuereinheit oder umgekehrt integriert sein. Der Bediener der Arbeitsmaschine kann mit der oder durch die Ein- und Ausgabeeinheit beispielsweise eine Geschwindigkeit der Arbeitsmaschine einstellen und/oder verstellen. Die Arbeitsmaschine kann ausserdem eines oder mehrere Hilfsaggregate umfassen, beispielsweise eine Pumpe und/oder einen Kühler etc.. Die Hilfsaggregate können ein Bestandteil der Hydraulik des Antriebsanordnung sein. Die Arbeitsmaschine kann den ersten Leistungsausgang, insbesondere die Zapfwelleneinheit umfassen. Die Steuereinheit kann konfiguriert sein, die Antriebsanordnung und/oder die Achse und/oder Arbeitsmaschine mit einem Fahrsignal einzustellen und/oder zu verstellen und/oder anzusteuern und mit dem oder basierend auf dem Fahrsignal eine Geschwindigkeit des Zugfahrzeugs einzustellen und/oder zu verstellen, insbesondere zu erhöhen oder zu verringern. Die Arbeitsmaschine kann das oder die Bodeneingriffsmittel umfassen. Die Bodeneingriffsmittel können die Arbeitsmaschine auf dem Boden abstützen und/oder tragen. Ein Zugfahrzeugrahmen der Arbeitsmaschine kann sich auf die Bodeneingriffsmittel abstützen. Die Bodeneingriffsmittel können Räder oder Raupen oder Ketten sein. Die Bodeneingriffsmittel können insbesondere Vorderräder und Hinterräder sein. Die Arbeitsmaschine kann einen Geschwindigkeitssensor zur Erfassung einer Geschwindigkeit der Arbeitsmaschine umfassen. Die Steuereinheit kann konfiguriert sein, die Antriebsanordnung und/oder die Achse und/oder die Arbeitsmaschine, insbesondere die erste und/oder zweite und/oder dritte Energiemaschine und/oder die Zapfwelleneinheit einzustellen und/oder zu verstellen und/oder anzusteuern, beispielsweise indem die Steuereinheit konfiguriert ist, die Ventile und/oder Ventilanordnungen dieser Komponenten einzustellen und/oder zu verstellen und/oder anzusteuern. Im Speziellen kann die Steuereinheit konfiguriert sein, eine Kraft und/oder ein Drehmoment und/oder eine Drehzahl der ersten und/oder zweiten und/oder dritten Energiemaschine einzustellen und/oder zu verstellen und/oder anzusteuern.

Die Antriebsanordnung oder die Achse oder die Arbeitsmaschine kann eine Leistungselektronik umfassen. Die Leistungselektronik und/oder der Energiespeicher kann/können in der Steuereinheit integriert sein oder als externe Einheit(en) von der Steuereinheit ansteuerbar sein. Die Leistungselektronik kann ein elektronisches Steuergerät und/oder einen Inverter und/oder einen Spannungswandler umfassen. Im Betrieb kann der Inverter die Spannung des Energiespeichers in eine Spannung oder Energie oder Leistung umwandeln, welche die Energiemaschine und/oder der Stator benötigen. Zum Aufladen des Energiespeichers kann dieser Vorgang umgekehrt werden. Die Steuereinheit kann eine Recheneinheit, einen Computer, einen Prozessor, einen Speicher und/oder alle Software, Hardware, Algorithmen, Anschlüsse, insbesondere auch Sensoren, umfassen, die für die Einstellung und/oder Verstellung der ersten und/oder zweiten und/oder dritten Energiemaschine erforderlich sind. Der Energiespeicher kann von einer geeigneten Steuerelektronik ansteuerbar sein, um elektrische Energie und/oder Leistung zu speichern und/oder an die erste und/oder zweite und/oder dritte Energiemaschine abzugeben. Die Steuereinheit und/oder die erste und/oder zweite und/oder dritte Energiemaschine können mit der Leistungselektronik und/oder dem Energiespeicher elektrisch verbunden und/oder elektrisch koppelbar sein. Ausserdem kann über oder mit der Leistungselektronik die Versorgung der Antriebsanordnung, insbesondere der ersten und/oder zweiten und/oder dritten Energiemaschinen und/oder des Energiespeichers mit Spannung und/oder Strom und/oder Energie und/oder Leistung gesteuert und/oder einstellbar und/oder verstellbar sein.

Die erste Koppeleinrichtung, insbesondere das erste Ventil oder die erste Ventileinrichtung oder der erste Aktuator, und/oder die zweite Koppeleinrichtung, insbesondere das zweite Ventil oder die zweite Ventileinrichtung oder der zweite Aktuator, und/oder die dritte Koppeleinrichtung, insbesondere das dritte Ventil oder die dritte Ventileinrichtung oder der dritte Aktuator, und/oder die vierte Koppeleinrichtung, insbesondere das vierte Ventil oder die vierte Ventileinrichtung oder der vierte Aktuator, und/oder die fünfte Koppeleinrichtung, insbesondere das fünfte Ventil oder die fünfte Ventileinrichtung oder der fünfte Aktuator, und/oder der Energiespeicher und/oder die Leistungselektronik und/oder die erste und/oder zweite und/oder dritte Energiemaschine und/oder der erste Leistungsausgang, insbesondere die Zapfwelleneinheit, können mit der Steuereinheit betreibbar, bevorzugt steuerbar und/oder regelbar, besonders bevorzugt ansteuerbar und/oder einstellbar und/oder verstellbar sein. Die Steuereinheit kann Signale zur Steuerung des Betriebs der Antriebsanordnung und/oder der Achse und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS- und/oder CAN-Standard entspricht. Die Steuereinheit kann als ein elektronisches Modul, ein eingebettetes System, eine Recheneinheit, ein Computer, als ein Modul zum Steuern und/oder Regeln der Antriebsanordnung und/oder der Achse und/oder der Arbeitsmaschine ausgebildet sein. Die Steuereinheit kann einen oder mehrere Prozessoren, einen Speicher und/oder alle Software, Hardware, Algorithmen, Anschlüsse, insbesondere auch Sensoren, umfassen, die für die Steuerung und/oder Regelung der Antriebsanordnung und/oder der Achse und/oder der Arbeitsmaschine erforderlich sind. Verfahren können als Programm oder Algorithmus ausgebildet sein, welches auf und/oder mit der Steuereinheit ausführbar sind. Die Steuereinheit kann jedes Gerät umfassen, das Daten von verschiedenen Sensoren analysiert, Daten vergleichen und die erforderlichen Entscheidungen treffen, um den Betrieb der Antriebsanordnung und/oder der Achse und/oder der Arbeitsmaschine und die erforderlichen Aufgaben zur Steuerung und/oder Regelung des Betriebs der Antriebsanordnung und/oder der Achse und/oder der Arbeitsmaschine, zu steuern und/oder zu regeln und/oder auszuführen. Die Steuereinheit kann mit den Bauteilen der Antriebsanordnung und/oder der Achse und/oder der Arbeitsmaschine, also insbesondere dem Fahrantrieb und/oder dem ersten Leistungsausgang, insbesondere der Zapfwelleneinheit, und/oder die erste Koppeleinrichtung, insbesondere das erste Ventil oder die erste Ventileinrichtung oder der erste Aktuator, und/oder die zweite Koppeleinrichtung, insbesondere das zweite Ventil oder die zweite Ventileinrichtung oder der zweite Aktuator, und/oder die dritte Koppeleinrichtung, insbesondere das dritte Ventil oder die dritte Ventileinrichtung oder der dritte Aktuator, und/oder die vierte Koppeleinrichtung, insbesondere das vierte Ventil oder die vierte Ventileinrichtung oder der vierte Aktuator, und/oder die fünfte Koppeleinrichtung, insbesondere das fünfte Ventil oder die fünfte Ventileinrichtung oder der fünfte Aktuator, und/oder der Energiespeicher und/oder die Leistungselektronik und/oder die erste und/oder zweite und/oder dritte Energiemaschine die Sensoren, beispielsweise der Geschwindigkeitssensor und/oder der oder den Drehzahl- und/oder Drehmomentsensor(en) signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsanordnung und/oder der Achse und/oder der Arbeitsmaschine kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnliches sein kann. Die Steuereinheit kann unmittelbar mit der in einer Kabine der Arbeitsmaschine angeordneten Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Die Erfindung kann weiter ein Verfahren zum Betreiben der Antriebsanordnung, insbesondere nach einem der Ansprüche 1 bis 9, und/oder der Achse, insbesondere nach Anspruch 10, und/oder der Arbeitsmaschine, insbesondere nach Anspruch 11, betreffen.

Ausführungsbeispiele

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:

Fig. 1    eine schematische Darstellung eines ersten Ausführungsbeispiels einer erfindungsgemässen Arbeitsmaschine, insbesondere eines landwirtschaftlichen Zugfahrzeugs in Form eines Ackerschleppers, und

Fig. 2    eine schematische Darstellung des ersten Ausführungsbeispiels der erfindungsgemässen Antriebsanordnung, und

Fig. 3    eine schematische Darstellung eines zweiten Ausführungsbeispiels der erfindungsgemässen Antriebsanordnung, und

Fig. 4    eine schematische Darstellung eines dritten Ausführungsbeispiels der erfindungsgemässen Antriebsanordnung, und

Fig. 5    eine schematische Darstellung eines vierten Ausführungsbeispiels der erfindungsgemässen Antriebsanordnung, und

Fig. 6    eine schematische Darstellung eines fünften Ausführungsbeispiels der erfindungsgemässen Antriebsanordnung, und

Fig. 7    eine schematische Darstellung eines sechsten Ausführungsbeispiels der erfindungsgemässen Antriebsanordnung, und

Fig. 8    eine schematische Darstellung eines siebten Ausführungsbeispiels der erfindungsgemässen Antriebsanordnung, und

Fig. 9    eine schematische Darstellung eines achten Ausführungsbeispiels der erfindungsgemässen Antriebsanordnung, und

Fig. 10   eine schematische Darstellung eines neunten Ausführungsbeispiels der erfindungsgemässen Antriebsanordnung, und

Fig. 11   eine schematische Darstellung eines zehnten Ausführungsbeispiels der erfindungsgemässen Antriebsanordnung, und

Fig. 12   eine schematische Darstellung eines weiteren Ausführungsbeispiels der erfindungsgemässen Antriebsanordnung, und

Fig. 13   eine schematische Darstellung eines weiteren Ausführungsbeispiels der erfindungsgemässen Antriebsanordnung, und

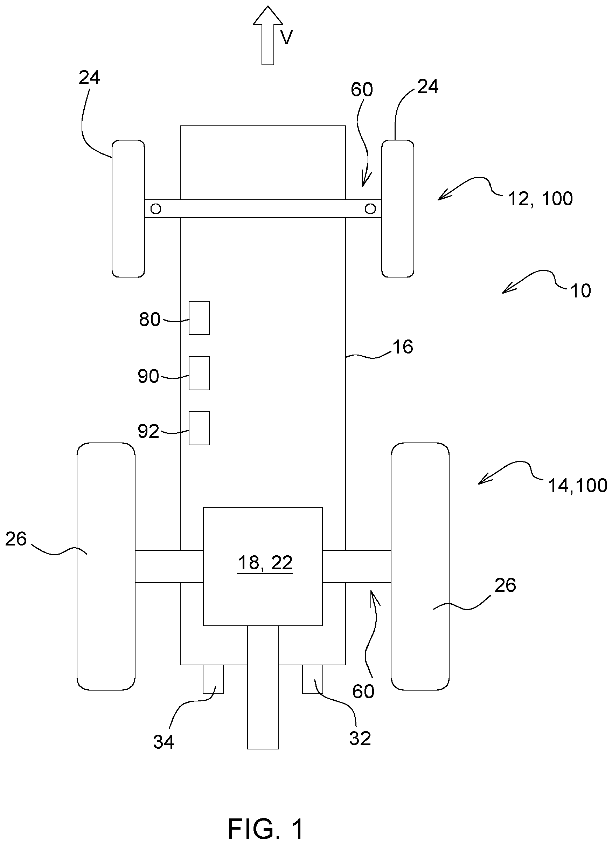

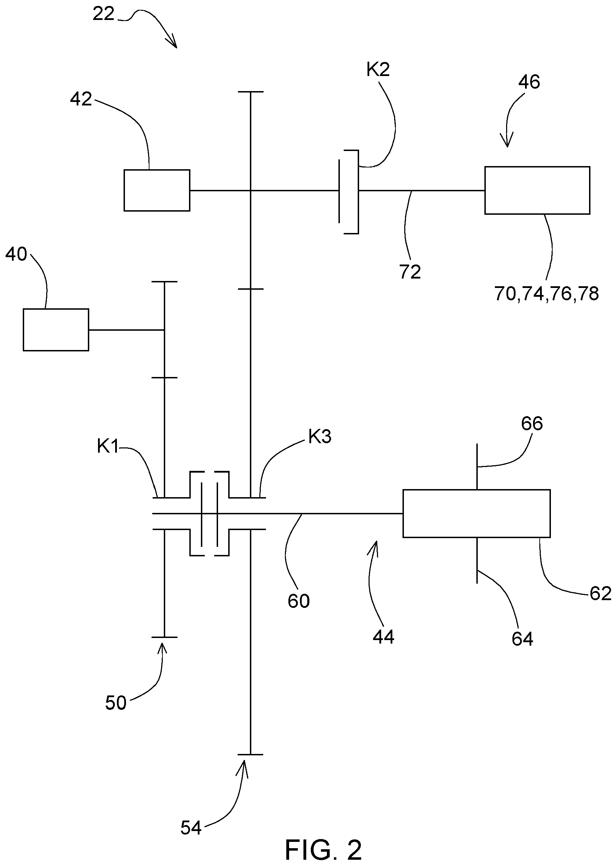

Die Figur 1 zeigt eine schematische Darstellung eines ersten Ausführungsbeispiels einer Arbeitsmaschine 10, insbesondere eines landwirtschaftlichen Zugfahrzeugs, das in Form eines Ackerschleppers bzw. Traktors ausgeführt ist. Die in einer Vorwärtsrichtung V, beispielsweise über ein Feld, bewegbar Arbeitsmaschine 10 umfasst ein tragendes Gestell 16, das sich durch zwei Achsen 100 auf dem Erdboden abstützt. Die zwei Achsen 100 sind als eine erste Fahrzeugachse 12, hier eine lenkbare Vorderachse mit Bodeneingriffsmitteln 24 ausgebildet, und eine zweite Fahrzeugachse 14, hier als antreibbare Hinterachse mit Bodeneingriffsmitteln 26 ausgebildet. Die Arbeitsmaschine 10 umfasst eine Antriebsanordnung 22. Die Arbeitsmaschine 10, insbesondere die Antriebsanordnung 22 oder die Achse 100, kann einen Energiespeicher 18, hier beispielsweise eine Batterie (Akkumulator) umfassen. Der Energiespeicher 18 kann elektrisch mit der Antriebsanordnung 22, insbesondere einer ersten und/oder zweiten und/oder dritten Energiemaschine 40, 42, 202 (siehe Figuren 2 bis 13) der Antriebsanordnung 22 verbunden sein. Die Antriebsanordnung 22 ist zum mechanischen Antrieb eines Fahrantriebs 44, insbesondere der Achse 100, hier der zweiten Fahrzeugachse 14, und/oder eines ersten Leistungsausgangs 32 ausgebildet. Der erste Leistungsausgang 32 kann als Zapfwelleneinheit ausgebildet sein, und kann zum Antreiben eines Arbeitsgeräts (nicht gezeigt) vorgesehen sein, das über eine Schnittstelle 34 (z.B. Dreipunktschnittstelle) an der Arbeitsmaschine 10 anbringbar ist. Die Achse 100, vorliegend die zweite Fahrzeugachse 14, kann die Antriebsanordnung 22 umfassen. Es kann aber jede Achse 100, insbesondere die erste und/oder zweite Fahrzeugachse 12, 14 jeweils eine Antriebsanordnung 22 umfassen. Die Arbeitsmaschine 10, insbesondere alternativ aber auch die Achse 100 oder die Antriebsanordnung 22, kann eine Steuereinheit 80 und/oder eine Ein- und Ausgabeeinheit 90 umfassen. Die Steuereinheit 80 ist mit der ersten und/oder zweiten und/oder dritten Energiemaschine 40, 42, 202 signalverbunden und/oder wirkend gekoppelt und/oder signalübertragend und/oder datenleitend verbunden. Die Steuereinheit 80 ist konfiguriert, die Drehzahl und/oder das Drehmoment der Antriebsanordnung 22, insbesondere der Energiemaschinen 40, 42, 202, einzustellen und/oder zu verstellen. Die Steuereinheit 80 kann konfiguriert sein, eine vorgebbare Drehzahl und/oder ein vorgebbares Drehmoment der Antriebsanordnung 22, insbesondere der Energiemaschinen 40, 42, 202, einzustellen und/oder zu verstellen. Die Steuereinheit 80 kann aber auch mit dem Energiespeicher 18 und/oder einer Leistungselektronik 92 der Arbeitsmaschine 10, insbesondere alternativ der Achse 100 oder der Antriebsanordnung 22, und/oder Sensoren der Antriebsanordnung 22, insbesondere alternativ der Achse 100 oder der Arbeitsmaschine 10, signalverbunden und/oder wirkend gekoppelt und/oder signalübertragend und/oder datenleitend verbunden sein. Die Steuereinheit 80 kann konfiguriert sein, die Antriebsanordnung 22 und/oder die Arbeitsmaschine 10 und/oder die Achse 100 einzustellen und/oder zu verstellen, bevorzugt die Drehzahl und/oder das Drehmoment des ersten Leistungsausgangs 32 und/oder des Fahrantriebs 44, insbesondere der Ausgangswelle 60, einzustellen und/oder zu verstellen.

Der Energiespeicher 18 versorgt die elektrisch angetriebenen Elemente der Antriebsanordnung 22, vgl. die Figuren 2 bis 7, insbesondere eine erste und/oder zweite und/oder dritte Energiemaschine 40, 42, 202, mit Energie, insbesondere mit Strömen bzw. Spannungen geeigneter Frequenz und Amplituden, um gewünschte Ausgangsdrehzahlen oder -Drehmomente für den Fahrantrieb 44, und somit die zweite Fahrzeugachse 14, und den ersten Leistungsausgang 32 bereitzustellen. Die Leistungselektronik 92 kann mit der ersten und/oder zweiten und/oder dritten Energiemaschine 40, 42, 202 und/oder dem Energiespeicher 18 elektrisch verbunden und/oder elektrisch koppelbar sein. Die erste und/oder zweite und/oder dritte Energiemaschine 40, 42, 202 und der Fahrantrieb 44, insbesondere die erste Ausgangswelle 60, können koaxial oder parallel zueinander angeordnet sein.

Figur 2 zeigt eine schematische Darstellung des ersten Ausführungsbeispiels der erfindungsgemässen Antriebsanordnung 22. Die in Figur 2 gezeigte Antriebsanordnung 22 entspricht im Wesentlichen der in Figur 1 Antriebsanordnung 22, sodass im Folgenden lediglich auf Details und/oder Unterschiede eingegangen wird. Die in Figur 1 dargestellte Arbeitsmaschine 10 kann die in Figur 2 dargestellte Antriebsanordnung 22 umfassen. Die Antriebsanordnung 22 umfasst eine erste und eine zweite Energiemaschine 40, 42 sowie einen Fahrantrieb 44 und einem ersten Leistungsausgang 46. Im ersten Modus, wenn das Drehmoment der ersten Energiemaschine 40 kleiner als der Drehmomentschwellwert ist und/oder die Drehzahl der ersten Energiemaschine 40 kleiner als der Drehzahlschwellwert ist, ist die erste Energiemaschine 40 mit dem Fahrantrieb 44 und die zweite Energiemaschine 42 mit dem ersten Leistungsausgang 46 verbunden, also insbesondere mit diesen gekoppelt und treibt diese an. Im zweiten Modus, wenn das Drehmoment der ersten Energiemaschine 40 grösser als der Drehmomentschwellwert ist und/oder die Drehzahl der ersten Energiemaschine 40 grösser als der Drehzahlschwellwert ist, ist die zweite Energiemaschine 42 mit dem Fahrantrieb 44 verbunden, also insbesondere mit diesem gekoppelt und treibt diesen an. Darüber hinaus kann im zweiten Modus alternativ die zweite Energiemaschine 42 mit dem Fahrantrieb 44 und dem ersten Leistungsausgang 44 verbunden sein, also insbesondere mit diesen gekoppelt sein und diese antreiben.

Die Antriebsanordnung 22 umfasst eine erste Koppeleinrichtung K1, wobei die erste Energiemaschine 40 mit der ersten Koppeleinrichtung K1 verbunden ist. Die erste Energiemaschine 40 ist mit der ersten oder durch die erste Koppeleinrichtung K1 mit dem Fahrantrieb 44 verbindbar oder verbunden. Die Antriebsanordnung 22 umfasst ausserdem eine zweite Koppeleinrichtung K2. Die zweite Energiemaschine 42 ist mit der zweiten oder durch die zweite Koppeleinrichtung K2 mit dem ersten Leistungsausgang 46 verbindbar oder verbunden. Die Antriebsanordnung 22 umfasst ausserdem eine dritte Koppeleinrichtung K3. Die zweite Energiemaschine 42 ist mit der dritten oder durch die dritte Koppeleinrichtung K3 mit dem Fahrantrieb 44 verbindbar.

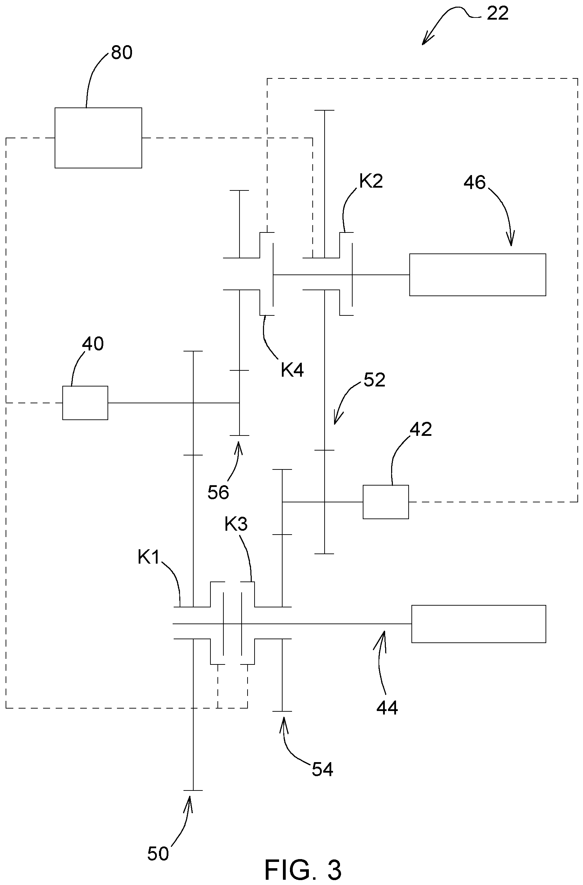

Die Antriebsanordnung 22 umfasst ausserdem eine erste und dritte Übersetzungsstufe 50, 54. Die erste Energiemaschine 40 ist durch die erste oder mit der ersten Übersetzungsstufe 50 mit der ersten Koppeleinrichtung K1 verbunden. Die zweite Energiemaschine 42 ist durch die dritte oder mit der dritten Übersetzungsstufe 54 mit der dritten Koppeleinrichtung K3 verbunden. Die erste und zweite und dritte Koppeleinrichtung K1, K2, K3 sind mit der Steuereinheit 80 (siehe Figur 3) verbunden, insbesondere signalverbunden und/oder wirkend gekoppelt und/oder signalübertragend und/oder datenleitend verbunden sein. Die erste, zweite und dritte Koppeleinrichtung K1, K2, K3 können zwischen der ersten Position und der zweiten Position einstellbar und/oder verstellbar sein, insbesondere auch von der ersten in die zweite Position und umgekehrt bewegbar sein (Details siehe oben).

Der Fahrantrieb 44 ist als eine erste Ausgangswelle 60 und ein Differenzialgetriebe 62 ausgebildet. Der Fahrantrieb 44 kann aber auch nur die erste Ausgangswelle 60 umfassen und/oder als erste Ausgangswelle 60 ausgebildet sein. Das Differenzialgetriebe 62 ist antriebsseitig mit der ersten Ausgangswelle 60 verbunden. Ausserdem kann das Differenzialgetriebe 62 abtriebsseitig mit einer linken Welle 64 und einer rechten Welle 66 zum Antrieb von Bodeneingriffsmitteln 26 der Achse 14, 100 verbunden sein. Die erste Ausgangswelle 60 kann als eine Hohlwelle ausgebildet sein, die insbesondere die linke und/oder rechte Welle 64, 66 teilweise oder vollständig umschliesst. Die Wellen 64, 66 sind starr mit den Abtrieben des Differenzialgetriebes 62 verbunden.

Die Antriebsanordnung 22 umfasst den ersten Leistungsausgang 46. Der erste Leistungsausgang 46 kann als eine Zapfwelleneinheit 70 ausgebildet sein und/oder diese umfassen. Die Zapfwelleneinheit 70 kann ein Zapfwellengetriebe 74 und/oder eine Zapfwelle 76 und/oder die zweite Ausgangswelle 72 umfassen. Die Zapfwelleneinheit 70, insbesondere das Zapfwellengetriebe 74, kann antriebsseitig mit der zweiten Ausgangswelle 72 verbunden sein. Ausserdem kann die Zapfwelleneinheit 70 abtriebsseitig mit der Zapfwelle 76 verbunden sein. Der erste Leistungsausgang 46 kann aber auch nur die zweite Ausgangswelle 72 umfassen und/oder als zweite Ausgangswelle 72 ausgebildet sein. Der erste Leistungsausgang 46 kann ausserdem ein erstes Winkelgetriebe 76 und/oder ein zweites Winkelgetriebe 78 umfassen. Ebenso kann ein zweiter Leistungsausgang 400 das zweites Winkelgetriebe 78 umfassen.

Figur 3 zeigt eine schematische Darstellung eines zweiten Ausführungsbeispiels der erfindungsgemässen Antriebsanordnung 22. Die in Figur 3 gezeigte Antriebsanordnung 22 entspricht im Wesentlichen der in den Figuren 1 und 2 gezeigten Antriebsanordnung 22, sodass im Folgenden lediglich auf Details und/oder Unterschiede eingegangen wird. Die in Figur 1 dargestellte Arbeitsmaschine 10 kann die in Figur 3 dargestellte Antriebsanordnung 22 umfassen. Die Antriebsanordnung 22 umfasst eine vierte Koppeleinrichtung K4, wobei die erste Energiemaschine 40 mit der vierten Koppeleinrichtung K4 verbunden ist. Die erste Energiemaschine 40 ist mit der vierten oder durch die vierte Koppeleinrichtung K4 mit dem ersten Leistungsausgang 46 verbindbar oder verbunden. Die Antriebsanordnung 22 umfasst ausserdem eine zweite und vierte Übersetzungsstufe 52, 56. Die erste Energiemaschine 40 ist durch die vierte oder mit der vierten Übersetzungsstufe 56 mit der vierten Koppeleinrichtung K4 verbunden. Die zweite Energiemaschine 42 ist durch die zweite oder mit der zweite Übersetzungsstufe 52 mit der zweiten Koppeleinrichtung K2 verbunden. Die vierte Koppeleinrichtung K4 kann ebenfalls zwischen der ersten Position und der zweiten Position einstellbar und/oder verstellbar sein, insbesondere auch von der ersten in die zweite Position und umgekehrt bewegbar sein (Details siehe oben).

Die erste, zweite, dritte und vierte Koppeleinrichtung K1, K2, K3, K4 sind mit der Steuereinheit 80 verbunden, insbesondere signalverbunden und/oder wirkend gekoppelt und/oder signalübertragend und/oder datenleitend verbunden sein (siehe gestrichelte Linie). Im Speziellen kann die Antriebsanordnung 22, insbesondere die erste Koppeleinrichtung K1, ein erstes Ventil oder eine erste Ventilanordnung (nicht gezeigt), insbesondere ein erstes Steuerventil, oder einen ersten Aktuator zum Ansteuern und/oder Einstellen und/oder Verstellen der ersten Koppeleinrichtung K1 umfassen. Ebenso kann die Antriebsanordnung 22, insbesondere die zweite Koppeleinrichtung K2, ein zweites Ventil oder eine zweite Ventilanordnung (nicht gezeigt), insbesondere ein zweites Steuerventil, oder einen zweiten Aktuator zum Ansteuern und/oder Einstellen und/oder Verstellen der zweiten Koppeleinrichtung K2 umfassen. Ebenso kann die Antriebsanordnung 22, insbesondere die dritte Koppeleinrichtung K3, ein drittes Ventil oder eine dritte Ventilanordnung (nicht gezeigt), insbesondere ein drittes Steuerventil, oder einen dritten Aktuator zum Ansteuern und/oder Einstellen und/oder Verstellen der dritten Koppeleinrichtung K3 umfassen. Ebenso kann die Antriebsanordnung, insbesondere die vierte Koppeleinrichtung K4, ein viertes Ventil oder eine vierte Ventilanordnung (nicht gezeigt), insbesondere ein viertes Steuerventil, oder einen vierten Aktuator zum Ansteuern und/oder Einstellen und/oder Verstellen der vierten Koppeleinrichtung K4 umfassen. Die Steuereinheit 80 kann mit dem ersten und/oder zweiten und/oder dritten und/oder vierten Ventil und/oder der ersten und/oder zweiten und/oder dritten und/oder vierten Ventilanordnung und/oder dem ersten und/oder zweiten und/oder dritten und/oder vierten Aktuator signalverbunden und/oder wirkend gekoppelt und/oder signalübertragend und/oder datenleitend verbunden sein. Die Steuereinheit 80 kann konfiguriert sein, die Koppeleinrichtungen K1, K2, K3, K4, insbesondere über die Ventile oder die Ventilanordnungen, anzusteuern und/oder einzustellen und/oder zu verstellen, bevorzugt in die erste Position oder zweite Position einzustellen und/oder zu verstellen, insbesondere auch von der ersten in die zweite Position und umgekehrt zu bewegen.

Die Steuereinheit 80 ist mit der ersten und zweiten Energiemaschine 40, 42 signalverbunden und/oder wirkend gekoppelt und/oder signalübertragend und/oder datenleitend verbunden sein. Die Steuereinheit kann konfiguriert sein, die Antriebsanordnung 22, insbesondere die erste und zweite Energiemaschine 40, 42, in Abhängigkeit von der Drehzahl und/oder dem Drehmoment in den ersten oder zweiten Modus einzustellen und/oder zu verstellen, insbesondere im ersten oder zweiten Modus zu betreiben. Die Steuereinheit 80 kann konfiguriert sein, die Antriebsanordnung 22 und somit auch die Arbeitsmaschine 10 mit dem oder in Abhängigkeit von der Drehzahl und/oder Drehmoment der ersten Energiemaschine 40 einzustellen und/oder zu verstellen und/oder anzusteuern, insbesondere also zu steuern und zu regeln. Die Steuereinheit 80 kann mit der gleichen Funktionalität und Verbindungen insbesondere auch in den Ausführungsformen der Figuren 1, 2 und 4 bis 5 vorhanden sein, auch wenn die Steuereinheit 80 nicht gezeigt ist.

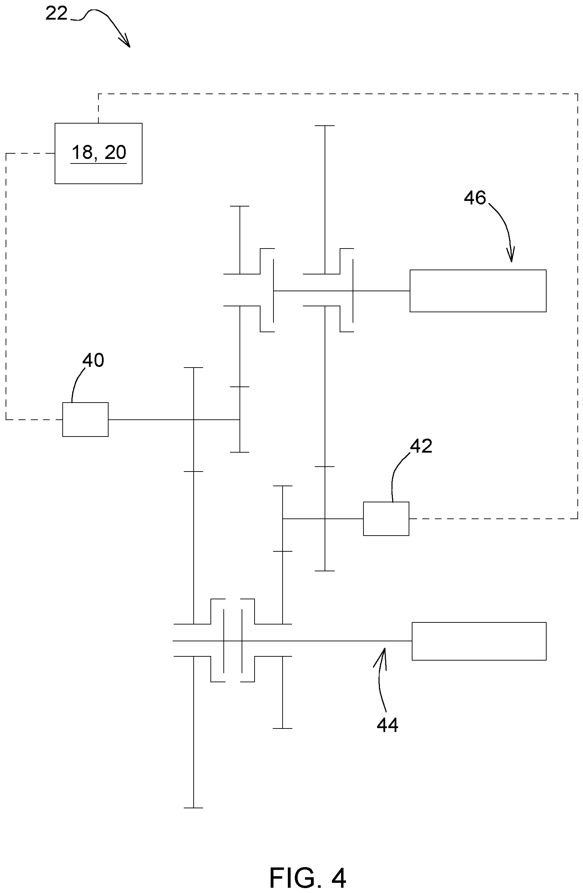

Figur 4 zeigt eine schematische Darstellung eines dritten Ausführungsbeispiels der erfindungsgemässen Antriebsanordnung 22. Die in Figur 4 gezeigte Antriebsanordnung 22 entspricht im Wesentlichen der in den Figuren 1 bis 3 gezeigten Antriebsanordnung 22, sodass im Folgenden lediglich auf Details und/oder Unterschiede eingegangen wird. Die in Figur 1 dargestellte Arbeitsmaschine 10 kann die in Figur 4 dargestellte Antriebsanordnung 22 umfassen.

Das Arbeitsfahrzeug 10 wird in der dargestellten Ausführungsform rein elektrisch angetrieben, wozu ein Energiespeicher 18, hier eine Batterie (Akkumulator) dient. Der Energiespeicher 18 ist elektrisch mit einer Antriebsanordnung 22 verbunden. Die Energieversorgung der Antriebsanordnung 22 erfolgt elektrisch über den Energiespeicher 18. Die Steuereinheit 80 kann mit dem Energiespeicher verbunden sein. Ebenso kann der Energiespeicher 18 eine Steuerung 20 umfassen. Die Steuerung 20 kann konfiguriert sein, den Energiespeicher einzustellen und/oder zu verstellen. Die Steuerung 20 kann konfiguriert sein, die elektrisch angetriebenen Elemente der Antriebsanordnung 22 mit Strömen bzw. Spannungen geeigneter Frequenz und Amplituden versorgen.

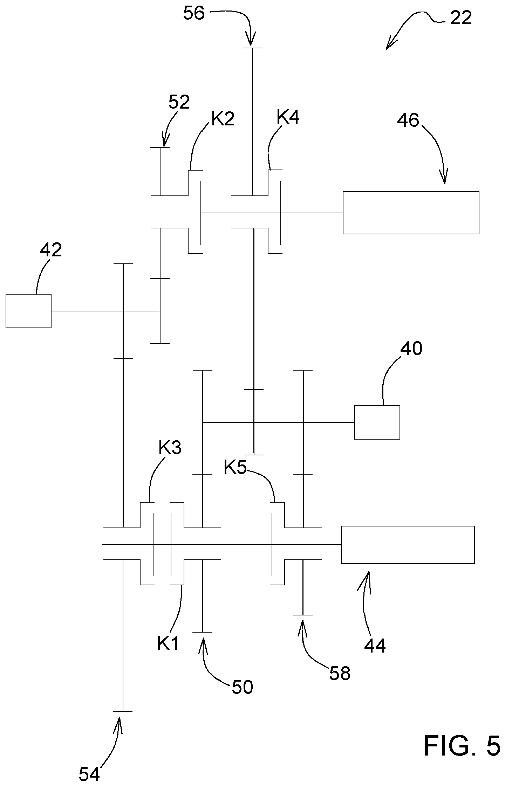

Figur 5 zeigt eine schematische Darstellung eines vierten Ausführungsbeispiels der erfindungsgemässen Antriebsanordnung 22. Die in Figur 5 gezeigte Antriebsanordnung 22 entspricht im Wesentlichen der in den Figuren 1 bis 4 gezeigten Antriebsanordnung 22, sodass im Folgenden lediglich auf Details und/oder Unterschiede eingegangen wird. Die in Figur 1 dargestellte Arbeitsmaschine 10 kann die in Figur 5 dargestellte Antriebsanordnung 22 umfassen.

Um eine Antriebsanordnung 22 mit drei Fahrstufen (m=3) für den Fahrantrieb 44 und einen Schaltpunkt (t=1), insbesondere nahtlos schaltbaren Schaltpunkt, am ersten Leistungsausgang 46 zu realisieren, umfasst die Antriebsanordnung 22 fünf Koppeleinrichtungen K1, K2, K3, K4, K5 umfassen (m+t+1=5). Zusätzlich umfasst die Antriebsanordnung 22 drei Übersetzungsstufen 50, 54, 58, die mit dem Fahrantrieb 44 verbindbar oder verbunden sind, und zwei Übersetzungsstufen 52, 56, die mit dem ersten Leistungsausgang 46 verbindbar oder verbunden ist. Es ist wichtig, dass die ungeraden und geraden Gänge separaten Energiemaschinen 40, 42 zugewiesen werden, um das Schalten zwischen den Gängen zu ermöglichen. Figur 5 zeigt eine Antriebsanordnung 22 mit 3-Gängen mit einem ersten und dritten Modus, welcher über die erste Energiemaschine 40 realisiert werden und ein zweiter Modus, der über die zweite Energiemaschine 42 realisiert wird. Das Schalten des Fahrantriebs 44 sowie eines Schaltpunktes des ersten Leistungsausgangs 46 erfolgt nahtlos.

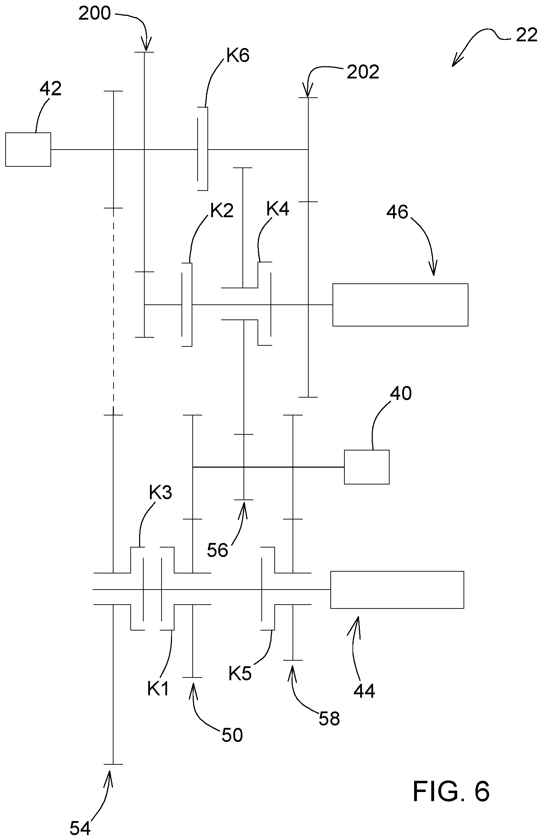

Figur 6 zeigt eine schematische Darstellung eines fünfte Ausführungsbeispiels der erfindungsgemässen Antriebsanordnung 22. Die in Figur 6 gezeigte Antriebsanordnung 22 entspricht im Wesentlichen der in den Figuren 1 bis 5 gezeigten Antriebsanordnung 22, sodass im Folgenden lediglich auf Details und/oder Unterschiede eingegangen wird. Die in Figur 1 dargestellte Arbeitsmaschine 10 kann die in Figur 6 dargestellte Antriebsanordnung 22 umfassen.

Um eine Antriebsanordnung 22 mit 3 Fahrstufen (m=3) für den Fahrantrieb und zwei Schaltpunkten (t=2), insbesondere nahtlos schaltbaren Schaltpunkten, am ersten Leistungsausgang 46 zu realisieren, umfasst diese sechs Koppeleinrichtungen K1, K2, K3, K4, K5, K6 (m+t+1=6). Zusätzlich umfasst die Antriebsanordnung 22 drei Übersetzungsstufen 50, 54, 58, die mit dem Fahrantrieb 44 verbindbar oder verbunden sind, und drei Übersetzungsstufen 56, 200, 202 die mit dem ersten Leistungsausgang 46 verbindbar oder verbunden ist. Dabei sind die Übersetzungsstufen 200, 202 nur mit oder durch die Koppeleinrichtung K6 mit dem ersten Leistungsausgang 46 verbindbar oder verbunden. Dadurch kann erreicht werden, dass zwei Schaltpunkte, insbesondere zwei nahtlose Schaltpunkte am erstem Leistungsausgang 46 realisiert werden.

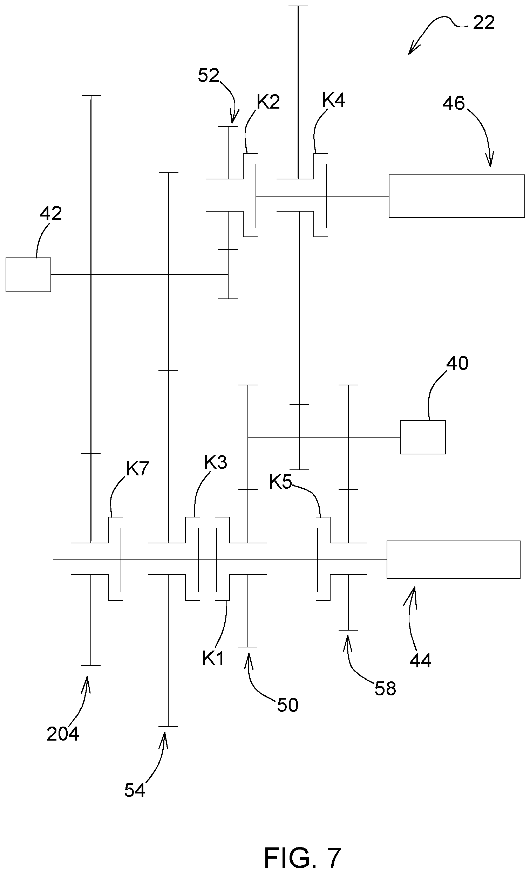

Figur 7 zeigt eine schematische Darstellunge eines sechsten Ausführungsbeispiels der erfindungsgemässen Antriebsanordnung 22. Die in Figur 7 gezeigte Antriebsanordnung 22 entspricht im Wesentlichen der in den Figuren 1 bis 6 gezeigten Antriebsanordnung 22, sodass im Folgenden lediglich auf Details und/oder Unterschiede eingegangen wird. Die in Figur 1 dargestellte Arbeitsmaschine 10 kann die in Figur 7 dargestellte Antriebsanordnung 22 umfassen. Die in Figur 7 gezeigte Antriebsanordnung 22 wird mit vier Fahrstufen (m=4) für den Fahrantrieb 44 und einem Schaltpunkt (t=1), insbesondere nahtlos schaltbaren Schaltpunkt, am ersten Leistungsausgang 46 realisiert, indem die Antriebsanordnung 22 sechs Koppeleinrichtungen K1, K2, K3, K4, K5, K7 umfasst (m+t+1=6). Zusätzlich umfasst die Antriebsanordnung 22, im Vergleich zu Figur 5, eine weitere Übersetzungsstufe 204, die mit dem Fahrantrieb 44 verbindbar oder verbunden sind. Der erste Leistungsausgang 46 kann nur nahtlos geschaltet werden, während der Fahrantrieb 42 einmal geschaltet wird, je nach den zwischen den beiden Energiemaschinen 40, 42 und dem ersten Leistungsausgang 46 gewählten Übersetzungsverhältnissen. Die Schaltvorgänge bis zum dritten Gang funktionieren wie beim synchronisierten 3-Gang-Getriebe. Für ein nahtloses Schalten des Fahrantriebs 44 von Gang 3 auf Gang 4 kann durch Einrücken der Koppeleinrichtung K7 und Ausrücken von K5 erreicht werden, was dazu führt, dass die zweite Energiemaschine den Fahrantrieb antreibt. Um den ersten Leistungsausgang 46 auch bei dieser hohen Drehzahl zu betreiben, kann die erste Energiemaschine 40 über K4 wieder an den ersten Leistungsausgang 46 angekoppelt werden.

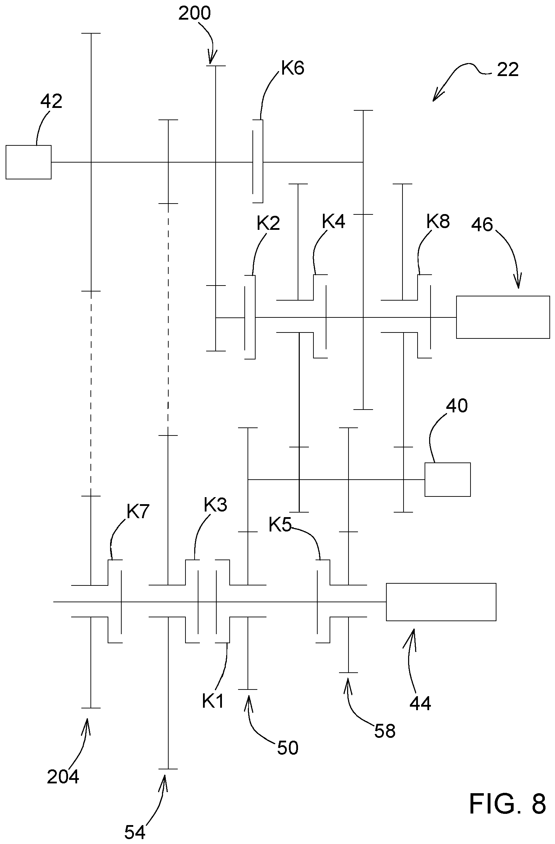

Figur 8 zeigt eine schematische Darstellung eines siebten Ausführungsbeispiels der erfindungsgemässen Antriebsanordnung 22. Die in Figur 8 gezeigte Antriebsanordnung 22 entspricht im Wesentlichen der in den Figuren 1 bis 7 gezeigten Antriebsanordnung 22, sodass im Folgenden lediglich auf Details und/oder Unterschiede eingegangen wird. Die in Figur 1 dargestellte Arbeitsmaschine 10 kann die in Figur 8 dargestellte Antriebsanordnung 22 umfassen. Die in Figur 8 gezeigte Antriebsanordnung 22 wird mit vier Fahrstufen (m=4) für den Fahrantrieb 44 und drei Schaltpunkten (t=3), insbesondere nahtlos schaltbaren Schaltpunkt, am ersten Leistungsausgang 46 realisiert, indem die Antriebsanordnung 22 acht Koppeleinrichtungen K1, K2, K3, K4, K5, K6, K7, K8 umfasst (m+t+1=8).

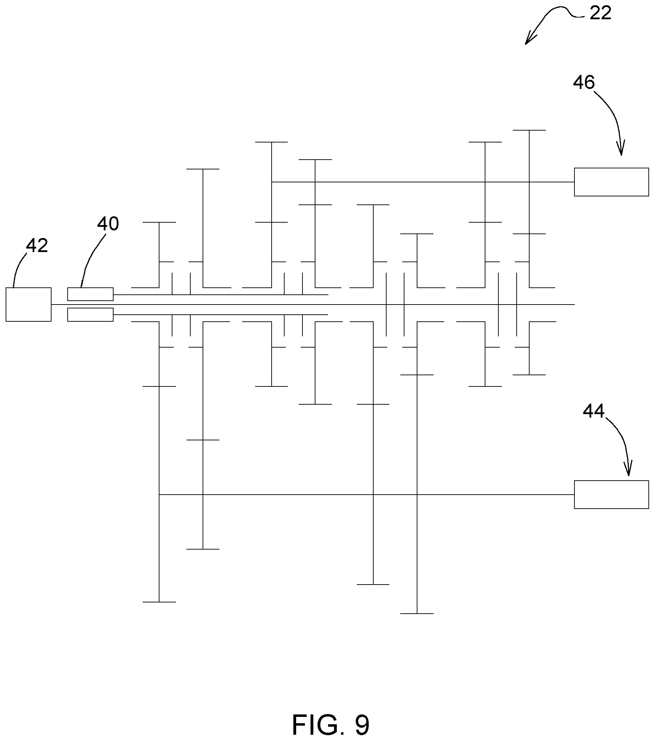

Figur 9 zeigt eine schematische Darstellung eines achten Ausführungsbeispiels der erfindungsgemässen Antriebsanordnung 22. Die in Figur 9 gezeigte Antriebsanordnung 22 entspricht im Wesentlichen der in den Figuren 1 bis 8 gezeigten Antriebsanordnung 22, sodass im Folgenden lediglich auf Details und/oder Unterschiede eingegangen wird. Die in Figur 1 dargestellte Arbeitsmaschine 10 kann die in Figur 9 dargestellte Antriebsanordnung 22 umfassen. Figur 9 zeigt eine alternierende Konfiguration für verschiedene Werte von m und t.

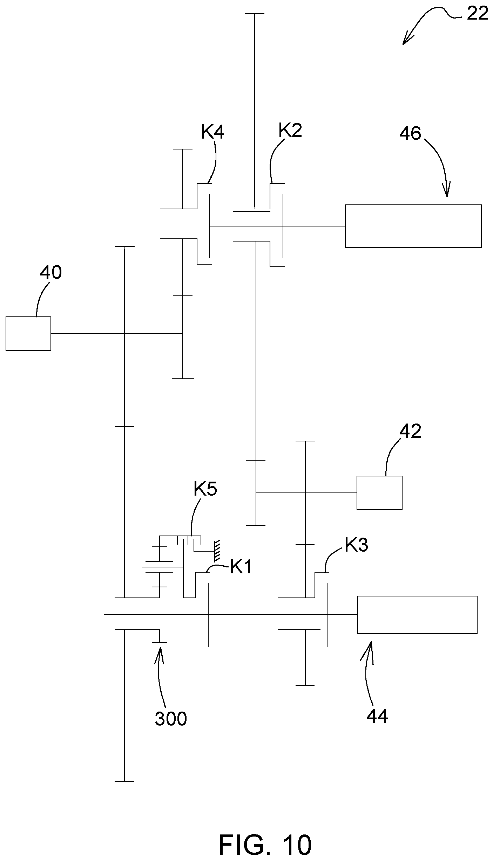

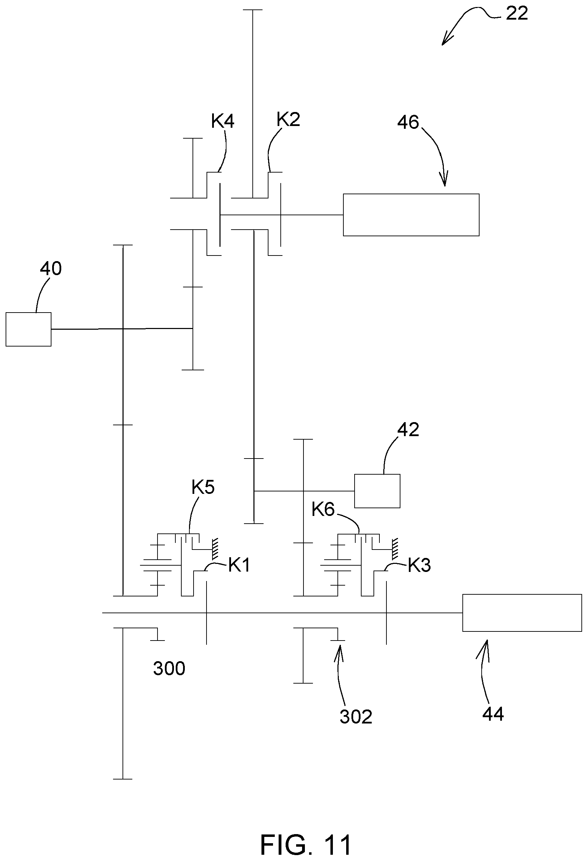

Die Figuren 10 und 11 zeigen schematische Darstellungen eines achten und neunten Ausführungsbeispiels der erfindungsgemässen Antriebsanordnung 22. Die in den Figuren 10 und 11 gezeigten Antriebsanordnungen 22 entsprechen im Wesentlichen der in den Figuren 1 bis 9 gezeigten Antriebsanordnung 22, sodass im Folgenden lediglich auf Details und/oder Unterschiede eingegangen wird. Die in Figur 1 dargestellte Arbeitsmaschine 10 kann die in den Figuren 10 und 11 dargestellten Antriebsanordnungen 22 umfassen. Die Figuren 10 und 11 zeigen Antriebsanordnung 22 mit Planetenradsätzen 300, 302, insbesondere schaltbare Planetenradsätze 300, 302 was die Antriebsanordnung 22 kompakt macht und/oder je nachdem, wo sich die Planetenradsätze 300, 302 befinden, mehrere Schaltpunkte, insbesondere nahtlose Schaltpunkte, des ersten Leistungsausgangs 46 ermöglicht. Es gilt dann für die Antriebsanordnung 22, dass diese x = m + 1 Koppeleinrichtungen K1, K2, K3, K4, K5 umfasst. Die Antriebsanordnung in Figur 10 weist drei Fahrstufen (m=3) auf. Die Antriebsanordnung 22 gemäss Figur 11 weist vier Fahrstufen (m=4) auf. Bei den in den Figure 10 und 11 dargestellten Antriebsanordnungen 22 werden nahtlose Schaltvorgänge für den ersten Leistungsausgang 46 dadurch erreicht, dass die erste und zweite Energiemaschine 40, 42 so konstruiert sind, dass ein gewisser Drehzahlbereich für den 3. bzw. 4. Gang des Fahrantriebs 44 verbleibt. Wenn dies nicht möglich ist, werden die Schaltvorgänge für den 3. und 4. Gang des ersten Leistungsausgangs durch PowerShift-Schaltvorgänge ausgeführt, da für die Schaltvorgänge eine Anpassung der Drehzahl der E-Maschine erforderlich ist.

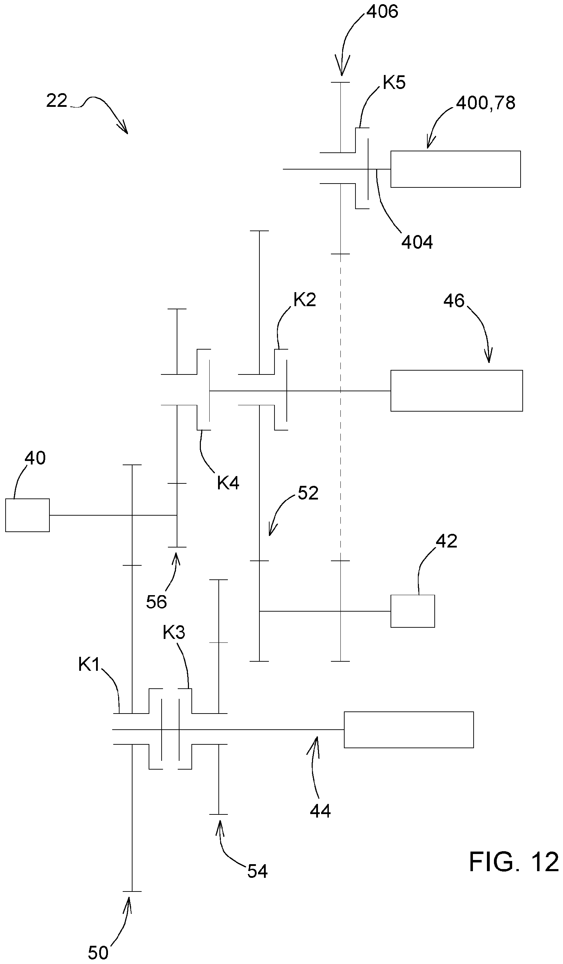

Figur 12 zeigt eine schematische Darstellung eines weiteren Ausführungsbeispiels der erfindungsgemässen Antriebsanordnung 22. Die in Figur 12 gezeigte Antriebsanordnung 22 entspricht im Wesentlichen der in den Figuren 1 bis 11 gezeigten Antriebsanordnung 22, sodass im Folgenden lediglich auf Details und/oder Unterschiede eingegangen wird. Die in Figur 1 dargestellte Arbeitsmaschine 10 kann die in Figur 12 dargestellte Antriebsanordnung 22 umfassen. Die Antriebsanordnung 22 umfasst einen zweiten Leistungsausgang 400. Der zweite Leistungsausgang 400 kann eine dritte Ausgangswelle 404 umfassen und/oder als dritte Ausgangswelle 404 ausgebildet sein. Der zweite Leistungsausgang 400 kann aber auch als eine weitere Zapfwelleneinheit ausgebildet sein bzw. diese umfassen. Die weitere Zapfwelleneinheit kann identisch zur Zapfwelleneinheit 70 ausgebildet sein. Alternativ oder zusätzlich kann der zweite Leistungsausgang 400 mit der Hydraulik, beispielsweise einer Pumpen- und/oder Kompressor-Einheit verbunden sein. Der zweite Leistungsausgang 400 kann das zweites Winkelgetriebe 78 umfassen. Die erste Energiemaschine 40 ist mit dem Fahrantrieb 44 und die zweite Energiemaschine 42 mit dem ersten und/oder zweiten Leistungsausgang 46, 200 verbunden, wenn eine Drehzahl n der ersten Energiemaschine 40 kleiner als ein oder gleich einem Drehzahlschwellwert $n_{schwell}$ ist, bevorzugt wenn eine Drehzahl n der ersten Energiemaschine 40 kleiner als der Drehzahlschwellwert $n_{schwell}$ ist, und die zweite Energiemaschine 42 ist mit dem Fahrantrieb 44 verbunden, wenn eine Drehzahl n der ersten Energiemaschine 40 grösser als der Drehzahlschwellwert $n_{schwell}$ ist. Die zweite Energiemaschine 42 kann mit der fünften oder durch die fünfte Koppeleinrichtung K5 in der ersten Position mit dem zweiten Leistungsausgang 400, insbesondere der zweiten oder dritten Ausgangswelle 72, 404 verbunden sein, und in der zweiten Position nicht mit dem zweiten oder dritten Leistungsausgang 46, 400, insbesondere der zweiten oder dritten Ausgangswelle 72, 404, verbunden, also entkoppelt sein. Die Antriebsanordnung 22 kann eine fünfte Übersetzungsstufe 406 umfassen. Die zweite Energiemaschine 42 kann durch die fünfte oder mit der fünften Übersetzungsstufe 406 mit der fünften Koppeleinrichtung K5 verbunden sein.

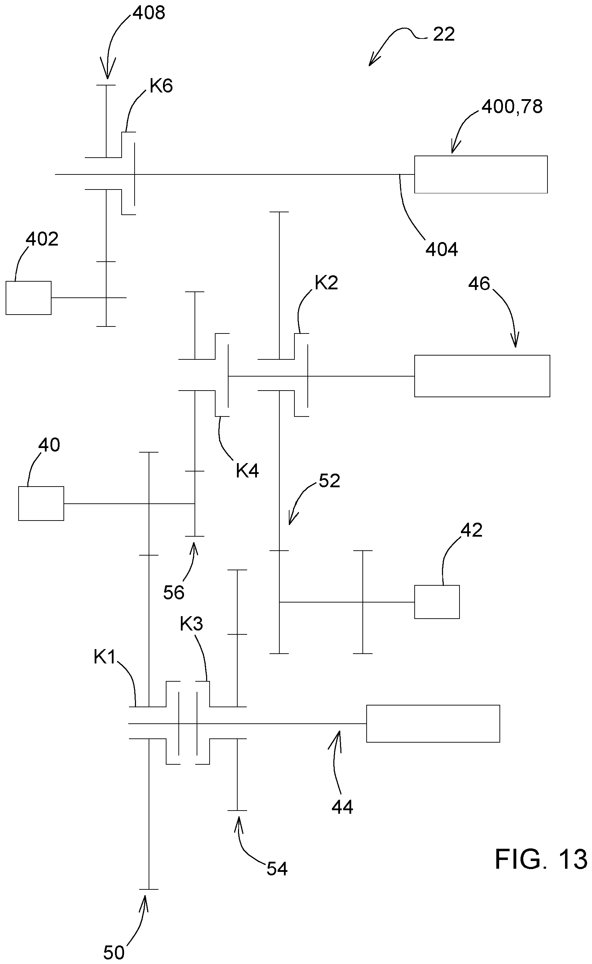

Figur 13 zeigt eine schematische Darstellung eines weiteren Ausführungsbeispiels der erfindungsgemässen Antriebsanordnung 22. Die in Figur 13 gezeigte Antriebsanordnung 22 entspricht im Wesentlichen der in den Figuren 1 bis 12 gezeigten Antriebsanordnung 22, sodass im Folgenden lediglich auf Details und/oder Unterschiede eingegangen wird. Die in Figur 1 dargestellte Arbeitsmaschine 10 kann die in Figur 13 dargestellte Antriebsanordnung 22 umfassen. Die Antriebsanordnung 22 umfasst eine dritte Energiemaschine 402. Die dritte Energiemaschine 402 ist mit dem zweiten Leistungsausgang 400 verbunden. Alternativ oder zusätzlich kann die dritte Energiemaschine 402 mit dem zweiten Leistungsausgang 400 verbunden sein, wenn eine Drehzahl n der ersten Energiemaschine 40 kleiner als der oder gleich dem Drehzahlschwellwert $n_{schwell}$ ist, bevorzugt wenn eine Drehzahl n der ersten Energiemaschine 40 kleiner als der Drehzahlschwellwert $n_{schwell}$ ist. Die dritte Energiemaschine 402 kann mit der sechsten oder durch die sechste Koppeleinrichtung K6 in der ersten Position mit dem zweiten Leistungsausgang 400, insbesondere der dritten Ausgangswelle 404 verbunden sein, und in der zweiten Position nicht mit dem zweiten Leistungsausgang 400, insbesondere der dritten Ausgangswelle 404, verbunden, also entkoppelt sein. Die Antriebsanordnung 22 kann die sechste Übersetzungsstufe 408 umfassen. Die dritte Energiemaschine 402 kann durch die sechste oder mit der sechsten Übersetzungsstufe 408 mit der sechsten Koppeleinrichtung K6 verbunden sein. Der erste und/oder zweite und/oder dritte Elektromotor 40, 42, 402 und/oder der Fahrantrieb 44 können koaxial oder parallel zueinander angeordnet sein.

Alle gezeigten Ausführungen der Antriebsanordnung 22 zeichnen sich durch einen kompakten Aufbau und/oder ihre Schaltbarkeit, insbesondere eine synchronisierte und/oder eine nahtlose Schaltbarkeit aus.

## Patentansprüche

1. Antriebsanordnung (22) für eine Arbeitsmaschine (10), umfassend eine erste und eine zweite Energiemaschine (40, 42), und einen Fahrantrieb (44) und einen ersten Leistungsausgang (46),

   wobei mit der Antriebsanordnung m ≥ 2 Fahrstufen am Fahrantrieb (44) und t ≥ 0 Schaltpunkte am ersten Leistungsausgang (46) realisierbar sind,
   **dadurch gekennzeichnet, dass**
   die Antriebsanordnung x = m + t + 1 Koppeleinrichtungen (K1, K2, K3, K4, K5, K6, K7, K8) umfasst, wobei die erste Energiemaschine (40) durch mindestens eine Koppeleinrichtung (K1, K5) mit dem Fahrantrieb (44) verbindbar ist und die zweite Energiemaschine (42) durch jeweils mindestens eine Koppeleinrichtung (K2, K3, K6, K7) mit dem Fahrantrieb (44) und dem ersten Leistungsausgang (46) verbindbar ist.

2. Antriebsanordnung (22) nach Anspruch 1, wobei die Antriebsanordnung (22) eine erste Koppeleinrichtung (K1) umfasst, und die erste Energiemaschine (40) mit der ersten Koppeleinrichtung (K1) verbunden ist und mit der ersten Koppeleinrichtung (K1) mit dem Fahrantrieb (44) verbindbar ist und/oder die Antriebsanordnung (22) eine zweite Koppeleinrichtung (K2) umfasst, wobei die zweite Energiemaschine (42) mit der zweiten Koppeleinrichtung (K2) verbunden ist und mit der zweiten Koppeleinrichtung (K2) oder über die zweite Koppeleinrichtung (K2) mit dem ersten Leistungsausgang (46) verbindbar ist und/oder die Antriebsanordnung (22) eine dritte Koppeleinrichtung (K3) umfasst, und die zweite Energiemaschine (42) mit der dritten Koppeleinrichtung (K3) verbunden ist und mit der oder durch die dritte Koppeleinrichtung (K3) mit dem Fahrantrieb (44) verbindbar ist und/oder die Antriebsanordnung (22) eine vierte Koppeleinrichtung (K4) umfasst und die erste Energiemaschine (40) mit der vierten Koppeleinrichtung (K4) verbunden ist, und die erste Energiemaschine (40) mit der oder durch die vierte Koppeleinrichtung (K4) mit dem ersten Leistungsausgang (46) verbindbar ist.

3.  Antriebsanordnung (22) nach Anspruch 1 oder 2, wobei die erste Energiemaschine (40) mit dem Fahrantrieb (44) und die zweite Energiemaschine (42) mit dem ersten Leistungsausgang (46) verbunden ist, wenn eine Drehzahl der ersten Energiemaschine (40) kleiner als ein oder gleich einem Drehzahlschwellwert ($n_{schwell,m}$) ist, und die zweite Energiemaschine (42) mit dem Fahrantrieb (44) verbunden ist, wenn eine Drehzahl der ersten Energiemaschine (40) grösser als der Drehzahlschwellwert ($n_{schwell,m}$) ist.

4.  Antriebsanordnung (22) nach Anspruch 3, wobei die zweite Energiemaschine (42) mit dem Fahrantrieb (44) und dem ersten Leistungsausgang (46) verbunden ist, wenn die Drehzahl (n) der ersten Energiemaschine (40) grösser als der Drehzahlschwellwert ($n_{schwell,m}$) ist, oder die zweite Energiemaschine (42) mit dem Fahrantrieb (44) und die erste Energiemaschine (40) mit dem ersten Leistungsausgang (46) verbunden ist, wenn die Drehzahl (n) der ersten Energiemaschine (40) grösser als der Drehzahlschwellwert ($n_{schwell,m}$) ist.

5.  Antriebsanordnung (22) nach mindestens einem der vorangehenden Ansprüche, wobei die Antriebsanordnung (22) einen zweiten Leistungsausgang (400) umfasst.

6.  Antriebsanordnung (22) nach Anspruch 5, wobei die erste Energiemaschine (40) mit dem Fahrantrieb (44) und die zweite Energiemaschine (42) mit dem ersten und zweiten Leistungsausgang (46, 400) oder dem zweiten Leistungsausgang (400) verbunden ist, wenn eine Drehzahl (n) der ersten Energiemaschine (40) kleiner als ein Drehzahlschwellwert ($n_{schwell,m}$) ist, und die zweite Energiemaschine (42) ist mit dem Fahrantrieb (44) verbunden, wenn eine Drehzahl (n) der ersten Energiemaschine grösser als der Drehzahlschwellwert ($n_{schwell,m}$) ist.

7.  Antriebsanordnung (22) nach Anspruch 6, wobei die Antriebsanordnung (22) einen dritten Energiemaschine (402) umfasst, und die dritte Energiemaschine (402) mit dem zweiten Leistungsausgang (400) verbunden ist.

8.  Antriebsanordnung (22) nach mindestens einem der vorangehenden Ansprüche, wobei der erste Leistungsausgang (46) ein erstes Winkelgetriebe (76) und/oder ein zweites Winkelgetriebe (78) oder der zweite Leistungsausgang (400) ein zweites Winkelgetriebe (78) umfasst.

9.  Antriebsanordnung (22) nach mindestens einem der vorangehenden Ansprüche, wobei der erste und/oder zweite und/oder dritte Elektromotor (40, 42, 402) und der Fahrantrieb (44) koaxial oder parallel zueinander angeordnet sind.

10. Achse für eine Arbeitsmaschine (10), umfassend eine Antriebsanordnung (22) nach einem der Ansprüche 1 bis 9.

11. Arbeitsmaschine, umfassend eine Achse nach Anspruch 10 oder eine Antriebsanordnung nach einem der Ansprüche 1 bis 9.

FIG. 1

FIG. 2

FIG. 3

22

18, 20

46

40

42

44

FIG. 4

FIG. 5

FIG. 6

FIG. 7

FIG. 8

FIG. 9

FIG. 10

FIG. 11

FIG. 12

FIG. 13

Europäisches
Patentamt

European
Patent Office

Office européen
des brevets

# EUROPÄISCHER RECHERCHENBERICHT

**Nummer der Anmeldung**

EP 24 18 8294

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2022 200712 A1 (ZAHNRADFABRIK FRIEDRICHSHAFEN [DE]) 27. Juli 2023 (2023-07-27) | 1,2,9-11 | INV. B60K1/02 B60K17/28 |
| Y | * Absätze [0001], [0044] - [0046], [0052] - [0056]; Abbildung 1 * ----- | 3,4,8 | B60K37/046 |
| X | US 2024/217343 A1 (ONO KOHEI [JP]) 4. Juli 2024 (2024-07-04) | 1,2,9-11 | |
| Y | * Absätze [0054], [0055]; Abbildungen 1,2 * ----- | 3,4,8 | |
| X | CN 109 466 340 B (UNIV CHINA AGRICULTURAL) 24. Juli 2020 (2020-07-24) | 1,2,5-7, 9-11 | |
| Y | * Absatz [0054]; Abbildungen 1-3 * ----- | 3,4,8 | |
| Y | KR 2022 0086406 A (HANHO IND CO LTD [KR]) 23. Juni 2022 (2022-06-23) * Absätze [0067] - [0078] * ----- | 3,4 | |
| Y | CN 106 828 064 A (UNIV CHINA AGRICULTURAL) 13. Juni 2017 (2017-06-13) * Abbildung 1 * ----- | 8 | |
| Y | DE 10 2018 222251 A1 (ZAHNRADFABRIK FRIEDRICHSHAFEN [DE]) 25. Juni 2020 (2020-06-25) * Absätze [0045] - [0046]; Abbildungen 1,6,7 * ----- | 8 | |
| Y | US 2012/181095 A1 (LOPEZ GILBERT THOMAS [US]) 19. Juli 2012 (2012-07-19) * Absatz [0037]; Abbildungen 1a,6 * ----- | 8 | |
| A | JP 5 826042 B2 (KUBOTA KK) 2. Dezember 2015 (2015-12-02) * Absätze [0047] - [0049]; Abbildung 3 * ----- | 1-11 | |

**RECHERCHIERTE SACHGEBIETE (IPC)**

B60K

Der vorliegende Recherchenbericht wurde für alle Patentansprüche erstellt

| Recherchenort | Abschlußdatum der Recherche | Prüfer |
|---|---|---|
| München | 13. November 2024 | Martínez Hurtado, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 24 18 8294

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2024

| Im Recherchenbericht angeführtes Patentdokument | Datum der Veröffentlichung | Mitglied(er) der Patentfamilie | Datum der Veröffentlichung |
|---|---|---|---|
| DE 102022200712 A1 | 27-07-2023 | DE 102022200712 A1<br>WO 2023139229 A1 | 27-07-2023<br>27-07-2023 |
| US 2024217343 A1 | 04-07-2024 | EP 4397520 A1<br>JP 2024096587 A<br>US 2024217343 A1 | 10-07-2024<br>17-07-2024<br>04-07-2024 |
| CN 109466340 B | 24-07-2020 | KEINE | |
| KR 20220086406 A | 23-06-2022 | CN 114635950 A<br>KR 20220086406 A | 17-06-2022<br>23-06-2022 |
| CN 106828064 A | 13-06-2017 | KEINE | |
| DE 102018222251 A1 | 25-06-2020 | KEINE | |
| US 2012181095 A1 | 19-07-2012 | KEINE | |
| JP 5826042 B2 | 02-12-2015 | JP 5826042 B2<br>JP 2013141955 A | 02-12-2015<br>22-07-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 20230227106 A1
- DE 102008032848 A1
- DE 102020114063 A1
- DE 102017205149 A1
- EP 1466773 A2
- DE 102019106294 A1